# EUROPEAN PATENT SPECIFICATION

(11) **EP 3 624 012 B1**
(45) Date of publication and mention of the grant of the patent: **27.10.2021**
(21) Application number: 19195401.5
(22) Date of filing: 04.09.2019
(51) Int. Cl.: G06K 15/02, G06K 15/10, H04N 1/60, B41J 11/00

(54) **RECORDING APPARATUS AND RECORDING METHOD**
AUFZEICHNUNGSVORRICHTUNG UND AUFZEICHNUNGSVERFAHREN
APPAREIL ET PROCÉDÉ D'ENREGISTREMENT

(30) Priority: 14.09.2018 JP 2018172861
(43) Date of publication of application: 18.03.2020
(73) Proprietor: Ricoh Company, Ltd., Tokyo 143-8555 (JP)
(72) Inventor: HARADA, Yoshihiro, Tokyo 143-8555 (JP)
(74) Representative: White, Duncan Rohan

(56) References cited:
- EP-A2- 2 103 438
- JP-A- 2016 024 089
- US-A1- 2015 099 059

## Description

### BACKGROUND

### Technical Field

The present invention relates to a recording apparatus and a recording method.

### Discussion of the Background Art

In a recording apparatus such as an inkjet recording type image forming apparatus, predetermined sizes of ink droplets are discharged from a recording head such as an inkjet head and are landed on a recording medium to form predetermined sizes of ink dots.

As such a recording apparatus, there is known a one-pass type recording apparatus using a line head of a recording medium page width in order to form an image at high speed. Further, in the one-pass type recording apparatus, there is known a recording apparatus which suppresses a flow of ink by coating a recording medium with a pre-treatment liquid before landing ink droplets and promoting the aggregation of the ink droplets in order to prevent image quality deterioration due to the flow of ink between adjacent ink droplets.

In order to aggregate ink droplets in a shorter time, it is necessary to adjust conditions such as the addition concentration of the pre-treatment liquid and the coating amount on the recording medium. In order to adjust the conditions of the pre-treatment liquid, it is necessary to measure and evaluate the aggregation state of ink droplets in response to the condition of the pre-treatment liquid.

As a technique for measuring the liquid state of the ink, there is disclosed a technique that measures a particle diameter and a particle diameter distribution of particles at a specific position inside a liquid on the basis of a Brownian motion measurement state of the particle and a Stokes-Einstein equation (for example, see JP-2003-106979-A).

However, in the technique disclosed in JP-2003-106979-A, which is regarded as closest prior art, the particle diameter or the particle diameter distribution inside the liquid can be measured. However, a characteristic value indicating the aggregation state of the liquid cannot be acquired and the state of the liquid landed on the recording medium cannot be appropriately evaluated.

JP-A-2016024089 discloses a shape measurement unit having an image-capturing unit for image-capturing the shade of a liquid including a medium generated by irradiation of light and a fluid substance, the shape measurement unit measuring the outer shape of the liquid; a permeation state measurement unit, having an optical system for dividing light from a light source unit into reference light and measurement light and converting the interference light generated by interference between the reference light returning from a reference light path and the measurement light returning from the medium into an interference signal, the permeation state measuring unit measuring a permeation state to the medium on the basis of an optical interference tomographic measurement method; and a solidification state measurement unit having an optical system for dividing light from the light source unit into reference light heading toward the reference light path and measurement light heading toward a measurement light path and converting the interference light generated by interference between the reference light returning from the reference light path and the measurement light returning from the liquid into an interference signal, the solidification state measurement unit measuring the solidification state of the liquid on the basis of a low-coherence dynamic light scattering method.

### SUMMARY

The invention has been made in view of the above-described circumstances and an object of the invention is to appropriately evaluate an aggregation state of a liquid landed on a recording medium.

The invention provides a recording apparatus as claimed in claim 1 and a method as claimed in claim 13.

According to at least one embodiment of the invention, an aggregation state of a liquid landed on a recording medium can be appropriately evaluated.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a diagram describing an example of a configuration of a measurement section according to an embodiment;
FIG. 2 is a block diagram illustrating an example of a hardware configuration of a process section according to an embodiment;
FIGS. 3A to 3C are diagrams describing an example of an optical interference tomographic image according to an embodiment;
FIG. 4 is a diagram illustrating an example of a component of a process section according to a first embodiment as a functional block;
FIG. 5 is a diagram describing an example of an optical interference tomographic image accompanied by optical attenuation;
FIG. 6 is a graph describing an example of a pixel brightness change of an optical interference tomographic image due to optical attenuation;
FIG. 7 is a diagram describing an example of an optical interference tomographic image accompanied by optical attenuation when an aggregation layer is provided;
FIG. 8 is a graph describing an example of a pixel brightness change of an optical interference tomographic image due to optical attenuation when an aggregation layer is provided;
FIG. 9 is a graph describing an example of an optical attenuation correction result according to the first embodiment;
FIG. 10 is a graph describing an example of a characteristic value according to the first embodiment;
FIG. 11 is a flowchart illustrating an example of a process of a process section according to the first embodiment;
FIG. 12 is a diagram describing an example of a configuration of an image forming apparatus according to a second embodiment;
FIG. 13 is a diagram describing an example of a configuration of a pre-treatment section according to the second embodiment;
FIG. 14 is a diagram describing an example of a configuration of a dryer according to the second embodiment;
FIG. 15 is a diagram describing an example of a configuration of an image forming section according to the second embodiment;
FIG. 16 is a diagram describing an example of an arrangement of a measurement section according to the second embodiment;
FIG. 17 is a diagram illustrating an example of a component of a surface treatment controller according to the second embodiment as a functional block;
FIG. 18 is a flowchart illustrating an example of a process of a surface treatment controller according to the second embodiment;
FIG. 19 is a diagram describing a modified example of a configuration of a pre-treatment section according to the second embodiment;
FIG. 20 is a diagram illustrating an example of a component of a surface treatment controller according to a third embodiment as a functional block;
FIG. 21 is a graph describing an aggregation threshold value according to the third embodiment;
FIG. 22 is a diagram describing an example of an optical interference tomographic image accompanied by optical attenuation of a landed droplet having a different thickness;
FIG. 23 is a graph describing an example of a pixel brightness change of an optical interference tomographic image due to optical attenuation of a landed droplet having a different thickness;
FIG. 24 is a flowchart illustrating an example of a process of a process section according to the third embodiment;
FIG. 25 is a diagram illustrating an example of a component of a process section according to a fourth embodiment;
FIG. 26 is a diagram describing an example of a temporal change of a temporal fluctuation period distribution of a probe light intensity;
FIG. 27 is a diagram describing an example of a temporal change of a landed droplet due to evaporation;
FIG. 28 is a diagram describing an example of a temporal change influence correction result of a landed droplet due to evaporation;
FIG. 29 is a flowchart illustrating an example of a process of a process section according to the fourth embodiment;
FIG. 30 is a diagram illustrating an example of a component of a process section according to a fifth embodiment as a functional block;
FIG. 31 is a diagram describing an example of an optical interference tomographic image including an aggregate; and
FIG. 32 is a flowchart illustrating an example of a process of the process section according to the fifth embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, an embodiment of the invention will be described with reference to the drawings. In the drawings, the same components will be denoted by the same reference numerals and a redundant description will be omitted.

A recording apparatus according to an embodiment is an apparatus which discharges liquid containing scattering particles to a recording medium and lands the liquid onto the recording medium. Further, the recording apparatus is an apparatus which outputs a characteristic value acquired on the basis of an optical interference tomographic image of a liquid landed on the recording medium and indicating an aggregation state of the landed liquid. Further, the term "aggregation" means that particles such as water dispersible colorants are adsorbed and collected inside a liquid.

The optical interference tomographic image can be acquired by, for example, optical coherence tomography (OCT).

In the embodiment, an example of an inkjet type image forming apparatus which discharges an ink from a recording head to a sheet and lands the ink onto the sheet. Further, the sheet is an example of the "recording medium" and the ink is an example of the "liquid". Further, the image forming apparatus is an example of the "recording apparatus".

In the term of the embodiment, the ink droplet landed onto the sheet will be referred to as a landed droplet. Also, the image forming, recording, and printing are all synonymous.

In the drawings, the X direction indicated by a dashed arrow indicates a direction of conveying a sheet onto which ink is landed and the Y direction indicates the width direction of the sheet intersecting the conveying direction. Further, the Z direction indicates the depth (height) direction intersecting the surface of the sheet onto which the ink is landed.

In the display of the optical interference tomographic image in the drawings, the color intensity (blackness) of the image indicates the intensity of the light (probe light) reflected or scattered inside the impacted droplet. The light intensity increases as the color becomes darker (black) and the light intensity decreases as the color becomes lighter. Further, the brightness of the pixel of the optical interference tomographic image increases as the color becomes darker (black) and the brightness of the pixel of the optical interference tomographic image decreases as the color becomes lighter (white).

### Configuration of Measurement Section

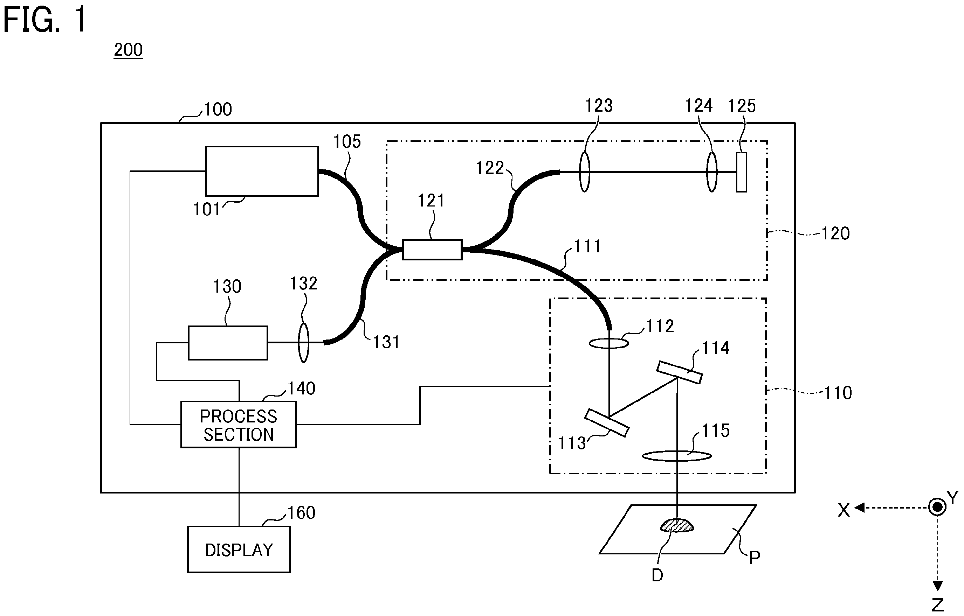

First, an example of a configuration of a measurement section of an image forming apparatus 200 according to the embodiment will be described with reference to FIG. 1. FIG. 1 is a diagram describing an example of a configuration of the measurement section 100 according to the embodiment.

In FIG. 1, the measurement section 100 is disposed to face a landed droplet D on a sheet P. The measurement section 100 includes a light source 101, an irradiation optical section 110, a coupling optical section 120, a detector 130, and a process section 140.

The light source 101 is, for example, a super luminescent diode (SLD) that emits near-infrared light with low coherence. The SLD is a light source which emits light of a wide band as in a light emitting diode (LED) and a light of a high intensity as in a laser diode (LD). Here, the light source 101 is not limited to the above-described one and may be a light source emitting light of a wavelength band different from near infrared light, an LED, or a white lamp as long as the light source emits light with low coherence.

The light emitted from the light source 101 is propagated inside an optical fiber 105 and is divided into two light beams by the optical fiber coupler 121. One of the divided light beams is incident to the irradiation optical section 110.

The irradiation optical section 110 indicated by a one-dotted chain line includes an optical fiber 111, a coupling lens 112, a mirror 113, a scanning optical section 114, and an objective lens 115. The irradiation optical section 110 allows the landed droplet D on the sheet P to be irradiated with at least a part of the light emitted from the light source 101.

The light divided by the optical fiber coupler 121 is propagated inside the optical fiber 111 and is incident to the mirror 113 through the coupling lens 112. The mirror 113 reflects the incident light toward the scanning optical section 114.

The scanning optical section 114 includes, for example, a Galvano mirror. Under the control of the process section 140, the Galvano mirror swings according to a drive voltage so that the light reflected by the Galvano mirror is scanned in the X direction in a reciprocating manner. The scanning light of the scanning optical section 114 is incident to the objective lens 115.

The objective lens 115 is separated from the landed droplet D in the optical axis direction of the light emitted to the landed droplet D is irradiated and faces the landed droplet D. The objective lens 115 condenses the scanning light of the scanning optical section 114 and emits light which converges or diverges toward the landed droplet D. Alternatively, parallel light may be emitted. At the time of emitting the light which converges or diverges, it is desirable to emit the light so that a focused spot is formed inside the landed droplet D. At the time of emitting the parallel light, it is desirable to emit a light beam as thin as possible in order to increase the spatial resolution of the optical coherence tomographic image to be described later. Such a focused spot or parallel light is scanned in the X direction by the scanning optical section 114. Further, the scanning direction of the scanning optical section 114 is not limited to the X direction, but may be the Y direction.

As the objective lens 115, for example, a condensing lens having a function of condensing light can be used. The condensing lens may be a refractive lens or a diffractive lens. Further, the objective lens 115 may be a combination of a plurality of lenses. The condensing lens can be decreased in thickness when the diffractive lens is used.

Further, the axis passing through the center of the objective lens 115 in the Z direction is an example of the "optical axis of the irradiation light" and the direction of the axis is an example of the "optical axis direction of the irradiation light".

Further, in the example illustrated in FIG. 1, the optical axis direction of the irradiation light is parallel to the Z direction. Also in the drawings below, it is assumed that the optical axis direction of the irradiation light is parallel to the Z direction unless otherwise specified.

The light emitted to the landed droplet D is reflected or scattered by the landed droplet D. The light is strongly reflected or scattered at an interface of materials having different refractive indexes. For that reason, the light emitted to the landed droplet D is reflected or scattered, for example, at an interface between the landed droplet D and air, an interface between the scattering particle and the solvent contained in the landed droplet D, or an interface between an aggregated part of the scattering particles and a non-aggregated part of the scattering particles (a solvent part).

The landed droplet D is, for example, a pigment ink. The pigment ink is an ink in which a pigment corresponding to a coloring component is not completely dissolved in a solvent. Further, the landed droplet D may not contain, for example, a water dispersible colorant. Each of the pigment and the water dispersible colorant dispersed in the solvent in this way is an example of the "scattering particle". For convenience of description, the light which is reflected or scattered by the landed droplet D will be referred to as "probe light" hereinafter.

The probe light passes through the objective lens 115 in a direction opposite to the forward direction and is reflected by the scanning optical section 114 and the mirror 113. The light reflected by the mirror 113 is propagated inside the optical fiber 111 through the coupling lens 112. Then, the reflected light is propagated inside the optical fiber 111 and is incident to the optical fiber coupler 121.

Meanwhile, the light emitted from the light source 101 is divided into two light beams by the optical fiber coupler 121 and the other light is incident to the coupling optical section 120.

The coupling optical section 120 which is indicated by a two-dotted chain line includes an optical fiber coupler 121, an optical fiber 122, a coupling lens 123, a lens 124, and a reference mirror 125. The coupling optical section 120 couples the light which is obtained by reflecting or scattering the irradiation light of the irradiation optical section 110 by the landed droplet D with the reference light.

The other light divided by the optical fiber coupler 121 is propagated inside the optical fiber 122 and is incident to the lens 124 through the coupling lens 123.

The lens 124 condenses the incident light and emits light which converges or diverges toward the reference mirror 125. Alternatively, the parallel light may be emitted. Similarly to the objective lens 115, the lens 124 can use, for example, a condensing lens having a light condensing function.

Here, it is desirable that the numerical aperture (NA) of the lens 124 is the same as that of the objective lens 115. Since the NA is the same, for example, the wave front shape of the light condensed by the lens 124 is substantially the same as the wave front shape of the light condensed by the objective lens 115 and aberrations such as defocus can be removed in the coupled light described later.

The reference mirror 125 reflects the light emitted by the lens 124. The light reflected by the reference mirror 125 passes through the lens 124 in a direction opposite to the forward direction and is propagated inside the optical fiber 122 through the coupling lens 123. Then, the light is propagated inside the optical fiber 122 and is incident to the optical fiber coupler 121. Further, the light reflected by the reference mirror 125 is at least a part of the light emitted from the light source 101 and is the light which is not reflected or scattered by the landed droplet. That is, this light is an example of the "reference light".

The probe light and the reference light are superimposed by the optical fiber coupler 121. In other words, the probe light and the reference light are coupled by the optical fiber coupler 121. When the length of the optical path through which the probe light has passed and the length of the optical path through which the reference light has passed are within the coherence length of the light source 101, both light beams interfere with each other so that interference fringes occur. The coupled light including the interference fringes is propagated inside the optical fiber 131 and is incident to the detector 130 through the coupling lens 132.

The detector 130 includes a spectrometer and a linear detector. The spectrometer splits the light incident to the detector 130. The split light reaches a position shifted in the X direction in response to the wavelength and forms a linear pattern on the linear detector. The linear pattern is detected by the linear detector.

As the spectrometer, for example, a diffraction grating can be used. Further, as the linear detector, a photo diode array (PDA) can be used. The PDA is an element in which photo diodes outputting voltage signals in response to the light intensity of the received light are arranged linearly. Alternatively, as the linear detector, a line sensor in which pixels are arranged linearly by a complementary metal oxide semiconductor device (CMOS) or a charge coupled device (CCD) may be used. The detector 130 outputs detected linear pattern data to the process section 140.

The process section 140 performs inverse Fourier transform on the input linear pattern data to calculate the light intensity of the probe light for each relative position of the landed droplet D with respect to the reference mirror 125. In other words, the relative position of the landed droplet D with respect to the reference mirror 125 is the position of the landed droplet D in the Z direction which does not consider the refractive index of the ink.

Further, the process section 140 converts the relative position of the landed droplet D with respect to the reference mirror 125 into a distance in consideration of the refractive index of the ink and calculates the light intensity of the probe light for each position in the optical axis direction of the irradiation light of the landed droplet D. When the optical axis direction of the irradiation light is parallel to the Z direction as in the example of FIG. 1, the light intensity of the probe light for each position (depth) in the Z direction is calculated. The process section 140 can acquire a one-dimensional optical interference tomographic image by combining the light intensities of the probe light for each position in the optical axis direction of the irradiation light.

In the embodiment, the irradiation light to the landed droplet D is scanned in the X direction by the scanning optical section 114. For that reason, it is possible to obtain the one-dimensional optical interference tomographic image for each scanning position of the irradiation light in the X direction. Then, the process section 140 can acquire a two-dimensional optical interference tomographic image by combining the one-dimensional optical interference tomographic images in the X direction for each scanning position of the irradiation light in the X direction. In the embodiment, an example in which the two-dimensional optical interference tomographic image is acquired and used will be described. Further, for brief description, hereinafter, the two-dimensional optical interference tomographic image will be simply referred to as an "optical interference tomographic image".

Here, the pixel in the X direction of the optical interference tomographic image indicates the minimum unit for decomposing the position in the X direction of the irradiation light and the pixel in the Z direction of the optical interference tomographic image indicates the minimum unit for decomposing the position in the Z direction of the irradiation light. In the optical interference tomographic image, the light intensity of the probe light is indicated as, for example, the brightness of each pixel.

The process section 140 acquires the optical interference tomographic image for each scanning period of the irradiation light to the landed droplet D. Further, the process section 140 can output a characteristic value indicating the aggregation state of the landed droplet D on the basis of the acquired optical interference tomographic image. Further, the process section 140 may acquire an optical interference tomographic image obtained by time-averaging the optical interference tomographic images acquired at predetermined time intervals longer than the scanning period. The process section 140 outputs the acquired optical interference tomographic image and/or the acquired characteristic value to a display 160.

The display 160 displays the input optical interference tomographic image and/or the input characteristic value. When the characteristic value is displayed, a graph and/or a table indicating the characteristic value is desirable. As the display 160, for example, an operation panel of the image forming apparatus 200 can be used. A user that uses the image forming apparatus 200 can evaluate the aggregation state of the landed droplet D by seeing, for example, the optical interference tomographic image and/or the characteristic value displayed on the operation panel which is the display 160. Further, the user can adjust the concentration of the reactant or the coating amount of the pre-treatment liquid to be applied on the sheet P on the basis of the evaluation result. The pre-treatment liquid will be separately described in detail.

As the display 160, an external display device connected to the image forming apparatus 250 may be used. The external display device is, for example, a liquid crystal display (LCD), an organic light emitting diode (OLED), a plasma display panel (PDP), or a cathode ray tube (CRT).

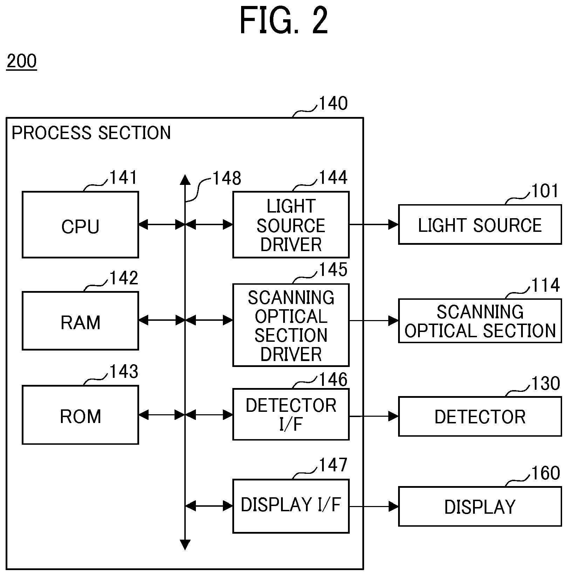

Next, FIG. 2 is a block diagram illustrating an example of a hardware configuration of the process section 140. The process section 140 includes a central processing unit (CPU) 141, a random access memory (RAM) 142, a read only memory (ROM) 143, a light source driver 144, a scanning optical section driver 145, a detector interface (I/F) 146, and a display I/F 147. These are electrically connected to one another via a system bus 148.

The CPU 141 generally controls the operation of the measurement section 100. The CPU 141 executes a program stored in the ROM 143 by using the RAM 142 as a work area to control the operation of the measurement section 100 and to realize various functions to be described later.

The light source driver 144 is an electric circuit which is electrically connected to the light source 101 and outputs a drive voltage to the light source 101. The scanning optical section driver 145 is an electric circuit which is electrically connected to the scanning optical section 114 and outputs a drive voltage to the scanning optical section 114.

The detector I/F 146 is an interface which is electrically connected to the detector 130, outputs a drive voltage to the detector 130, and inputs a detection signal obtained by the detector 130.

The display I/F 147 is an interface which is electrically connected to the display 160 and outputs the optical interference tomographic image and/or the characteristic value acquired by the process section 140 to the display 160.

In the measurement section 100 according to the above-described embodiment, an example in which the irradiation light of the irradiation optical section 110 is scanned in the X direction by the scanning optical section 114 has been described, but the invention is not limited. For example, the measurement section 100 may acquire the three-dimensional optical interference tomographic image using the scanning optical section scanning the irradiation light in the X direction and the Y direction instead of the mirror 113.

Further, the measurement section 100 may acquire the one-dimensional optical interference tomographic image in the optical axis direction of the irradiation light without scanning the irradiation light. For example, a fixed mirror without a scanning function is used in both of the mirror 113 and the scanning optical section 114 and the one-dimensional optical interference tomographic image in the optical axis direction of the irradiation light can be acquired without scanning the irradiation light. Alternatively, the light emitted from the optical fiber 111 through the coupling lens 112 is directly incident to the objective lens 115 without providing the mirror 113 and the scanning optical section 114. Accordingly, the one-dimensional optical interference tomographic image in the optical axis direction of the irradiation light may be acquired without scanning the irradiation light.

Visualization of Aggregation State by Optical Interference Tomographic Image

An aggregation promoter for promoting the aggregation of scattering particles inside the landed droplet D may be applied in advance on the surface of the sheet P. When the ink is landed on the sheet P to form the landed droplet D, the aggregation promoter on the surface of the sheet P is dispersed inside the landed droplet D to aggregate the scattering particles in the landed droplet D.

When the scattering particles are aggregated in the landed droplet D, a plurality of particles is combined and is considered as one particle. For this reason, the particle diameter of the scattering particle increases in appearance. The scattering particles increasing in apparent particle diameter in this way are further combined so that an aggregation layer which is a layered part obtained by aggregating the scattering particles is formed in the landed droplet D.

An increase in the particle diameter of the scattering particle influences the light intensity of the light scattered by the scattering particle. When the particle diameter of the scattering particle is sufficiently small with respect to the wavelength of the light emitted to the landed droplet D, the scattering of the light due to the scattering particles is dominated by Rayleigh scattering. For that reason, the light intensity of the scattered light is inversely proportional to the fourth power of the wavelength and is proportional to the sixth power of the particle diameter.

Since the particle diameter of the scattering particle in appearance increases as described above in accordance with the aggregation of the scattering particle, the light intensity of the scattered light due to the scattering particle also increases. Thus, it is possible to visualize and quantify the aggregation state of the scattering particle in the landed droplet D by the optical interference tomographic image indicating the light intensity of the light reflected or scattered in the landed droplet D. Further, since Mie scattering is dominant when the particle diameter is substantially the same as the wavelength of the irradiation light, the light intensity of the scattered light follows the theoretical formula of Mie scattering.

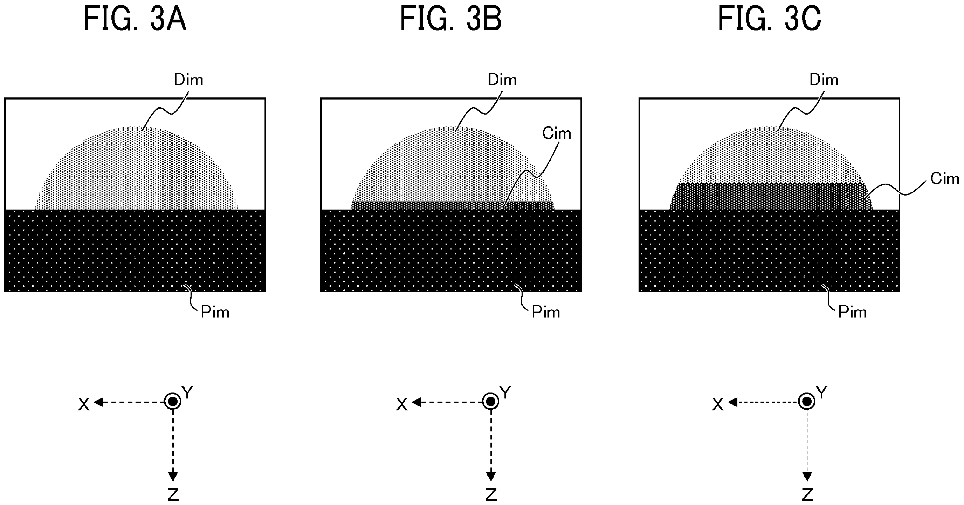

FIGS. 3A to 3c are diagrams describing an example of the optical interference tomographic image of the landed droplet acquired by the measurement section 100. FIG. 3A illustrates the optical interference tomographic image of the landed droplet D immediately after the ink droplet is landed on the sheet P and FIGS. 3B and 3C sequentially illustrate the optical interference tomographic image of the landed droplet D changing with time after the ink droplet is landed.

Since the aggregation of the scattering particle in the landed droplet D does not occur immediately after the ink droplet is landed, the particle diameter of the scattering particle does not increase and the scattering particle is uniformly dispersed in the landed droplet D. Thus, in FIG. 3A, an image Dim of the landed droplet D is illustrated uniformly in light color.

As the time elapses after the landing, the aggregation promoter on the surface of the sheet P is dispersed in the landed droplet D and the aggregation of the scattering particle is promoted by the action of the aggregation promoter. The particle diameter of the scattering particle in appearance increases due to the aggregation and the light intensity of the scattered light in the aggregation layer generated by combining the particle diameters in appearance increases. For that reason, in an image Dim of the landed droplet D illustrated in FIG. 3B, an image Cim of the aggregation layer having a large light intensity of the scattered light in the vicinity of a surface of an image Pim of the sheet P is illustrated in dark color.

When the time further elapses from the state of FIG. 3B, the aggregation promoter is further widely dispersed in the landed droplet D so that the aggregation layer is enlarged. For that reason, FIG. 3C illustrates the image Cim of the aggregation layer enlarged as compared with FIG. 3B.

In this way, in the embodiment, it is possible to visualize and quantify the aggregation state of the landed droplet D by the optical interference tomographic image acquired by the measurement section 100. Further, it is possible to acquire and output the characteristic value indicating the aggregation state of the landed droplet D on the basis of the optical interference tomographic image.

### First Embodiment

### Characteristic Value Acquisition Process

A process of acquiring the characteristic value indicating the aggregation state of the landed droplet D based on the optical interference tomographic image by the process section 140 according to a first embodiment will be described.

The process section 140 according to the embodiment performs a process of correcting each of the expansion of the optical interference tomographic image caused by the refractive index of the ink and the attenuation of the probe light in accordance with the depth of the irradiation light in the optical axis direction. Further, a process is performed such that a brightness value of a pixel of the corrected optical interference tomographic image is compared with an aggregation threshold value to distinguish an aggregation layer and a non-aggregation layer from each other and position data of an interface between the aggregation layer and the non-aggregation layer in the optical axis direction of the irradiation light is acquired and output as a characteristic value.

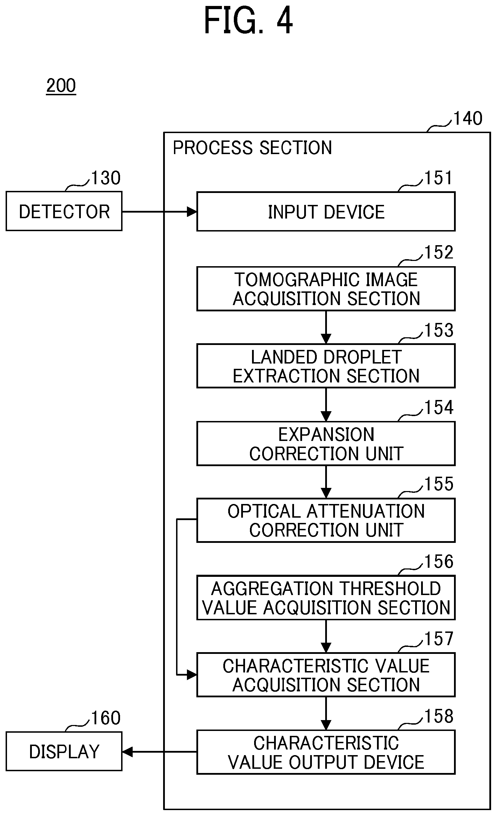

FIG. 4 is a diagram illustrating an example of a component of the process section 140 as a functional block. Further, each functional block of the process section 140 illustrated in FIG. 4 is conceptual and does not necessarily have to be physically configured as illustrated. All or part of each functional block can be functionally or physically distributed and combined in any unit. The whole or any part may be realized as hardware by wired logic or may be realized by a program executed by a CPU.

The process section 140 includes an input device 151, a tomographic image acquisition section 152, a landed droplet extraction section 153, an expansion correction unit 154, an optical attenuation correction unit 155, an aggregation threshold value acquisition section 156, a characteristic value acquisition section 157, and a characteristic value output device 158.

The input device 151 is electrically connected to the detector 130 and linear pattern data based on interference light is input from the detector 130 and is output to the tomographic image acquisition section 152.

As described above, the tomographic image acquisition section 152 perform inverse Fourier transform on the input linear pattern data to calculate the light intensity of the probe light for each relative position of the landed droplet D with respect to the reference mirror 125. Further, the tomographic image acquisition section 152 converts the relative position of the landed droplet D with respect to the reference mirror 125 into a distance in consideration of the refractive index of the ink and calculates the light intensity of the probe light for each position of the irradiation light in the optical axis direction.

The tomographic image acquisition section 152 calculates the light intensity of the probe light for each scanning position in the X direction of the scanning optical section 114 and each position of the irradiation light in the optical axis direction and connects them to acquire an optical interference tomographic image. The tomographic image acquisition section 152 outputs data indicating an acquisition result to the landed droplet extraction section 153 and the characteristic value output device 158.

The landed droplet extraction section 153 extracts only the image region corresponding to the landed droplet D from the input optical interference tomographic image. For example, since there is no reflected or scattered light in a region not corresponding to the landed droplet D in the optical interference tomographic image, the brightness value of the pixel decreases as compared with the region corresponding to the landed droplet D where the light reflected or scattered by the landed droplet D exists.

Thus, since a predetermined threshold value is provided for the brightness value of the pixel, it is possible to extract the region corresponding to the landed droplet D from the optical interference tomographic image. Such a threshold value is determined in advance by a simulation or experiment and is stored in the ROM 143. The landed droplet extraction section 153 acquires a landed droplet image from which the image region corresponding to the landed droplet is extracted by using the threshold value acquired by referring to the ROM 143 and outputs the landed droplet image to the expansion correction unit 154.

The expansion correction unit 154 corrects the expansion of the optical interference tomographic image due to the refractive index of the landed droplet D in the input landed droplet image. Here, since the refractive index of the landed droplet D is relatively higher than that of the air in the periphery of the landed droplet D, the landed droplet image in the optical interference tomographic image expands by the refractive index of the landed droplet D in the optical axis direction of the irradiation light. The expansion of the landed droplet image causes a shift of an actual position with respect to the position data in the optical axis direction of the irradiation light and deteriorates the optical attenuation correction accuracy or the characteristic value acquisition accuracy to be described later.

For that reason, the expansion correction unit 154 decreases the distance of the landed droplet image in the optical axis direction of the irradiation light by dividing, for example, the distance by the refractive index of the landed droplet D to correct the expansion. Accordingly, it is possible to prevent deterioration of the optical attenuation correction accuracy or the characteristic value acquisition accuracy due to the shift of the position data in the optical axis direction of the irradiation light. The expansion correction unit 154 outputs the expansion correction image obtained by correcting the expansion of the landed droplet image to the optical attenuation correction unit 155.

The optical attenuation correction unit 155 corrects the attenuation of the probe light in response to the position in the optical axis direction of the irradiation light in the input expansion correction image. Here, since the scattering particles exist in the landed droplet D, the light intensity of the probe light is attenuated in response to the position from the surface of the landed droplet D in the optical axis direction of the irradiation light due to the scattering or absorbing of the light due to the scattering particle with respect to the probe light when the thickness of the landed droplet D in the optical axis direction of the irradiation light is large.

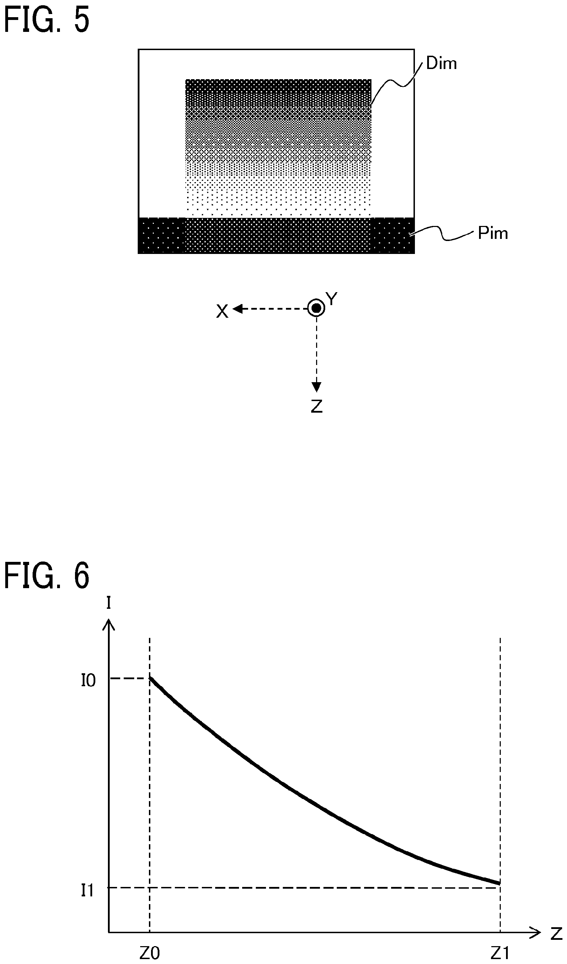

FIG. 5 is a diagram describing an example of the optical interference tomographic image accompanied by the optical attenuation. Further, in FIG. 5, for brief description, the image Dim of the droplet D landed on the sheet P is indicated by a rectangular shape.

In FIG. 5, it is assumed that the scattering particles are uniformly dispersed in the landed droplet D. As illustrated in FIG. 5, the brightness of the pixel of the image Dim of the landed droplet D gradually decreases at it goes from the surface of the landed droplet D (the interface with air) inward. This indicates that the light intensity of the probe light gradually decreases as it goes from the surface of the landed droplet D inward. In other words, it illustrates that the light intensity of the probe light is attenuated in response to the position in the optical axis direction of the irradiation light.

FIG. 6 is a graph describing an example of a change of the pixel brightness of the optical interference tomographic image due to the optical attenuation. In FIG. 6, a horizontal axis indicates the position Z in the Z direction and a vertical axis indicates the brightness I of the pixel of the optical interference tomographic image.

In FIG. 6, a position Z0 indicates the surface of the landed droplet D (the interface with air) and a position Z1 indicates the surface of the sheet P in the landed droplet D (the interface between the ink and the sheet P). Further, a brightness I0 indicates the pixel brightness at the position Z0 of the optical interference tomographic image and a brightness I1 indicates the pixel brightness at the position Z1 of the optical interference tomographic image. As illustrated in FIG. 6, the light intensity of the probe light decreases and the pixel brightness of the optical interference tomographic image decreases as it goes from the position Z0 toward the position Z1.

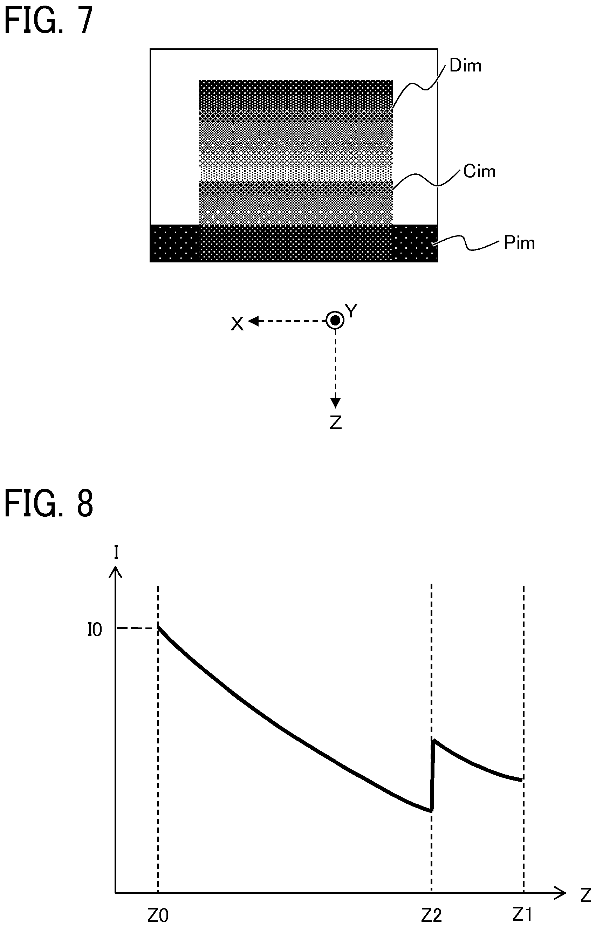

Meanwhile, FIG. 7 is a diagram describing an example of the optical interference tomographic image accompanied by the optical attenuation when the aggregation layer exists in the landed droplet D. Similarly to FIG. 5, the image Dim of the droplet D landed on the sheet P is indicated by a rectangular shape.

As illustrated in FIG. 7, the brightness of the pixel of the image Dim of the landed droplet D gradually decreases and the brightness of the pixel increases at a portion of the image Cim of the aggregation layer C as it goes from the surface of the landed droplet D inward. This illustrates that the light intensity of the probe light gradually deceases and the light intensity of the probe light increases at the interface between the aggregation layer C and the non-aggregation layer where the scattering particles are not aggregated as it goes from the surface of the landed droplet D inward.

FIG. 8 is a graph describing an example of a change of the pixel brightness of the optical interference tomographic image due to the optical attenuation when there is the aggregation layer C. Similarly to FIG. 6, in FIG. 8, a horizontal axis indicates the position Z in the Z direction and a vertical axis indicates the brightness I of the pixel of the optical interference tomographic image.

In FIG. 8, the position Z0 indicates the surface of the landed droplet D and the position Z1 indicates the surface of the sheet P in the landed droplet D. Further, the position Z2 indicates the interface between the aggregation layer C and the non-aggregation layer. Further, the aggregation layer C is an example of the "portion where the scattering particles are aggregated" and the non-aggregation layer is an example of the "portion where the scattering particles are not aggregated". The interface between the aggregation layer C and the non-aggregation layer is an example of the "boundary portion".

As illustrated in FIG. 8, the pixel brightness of the optical interference tomographic image decreases as it goes from the position Z0 toward the inside of the landed droplet D, increases at the position Z2, and decreases again toward the position Z1. Further, for brief description, it is assumed that the aggregation layer C and the non-aggregation layer have the same refractive index or attenuation coefficient.

For example, in a case in which the brightness value of the pixel of the coherence tomographic image is compared with a predetermined aggregation threshold value to distinguish the aggregation layer C and the non-aggregation layer from each other, the aggregation layer C and the non-aggregation layer cannot be correctly distinguished from each other when the pixel brightness changes at the optical attenuation as described above.

For that reason, the optical attenuation correction unit 155 corrects the attenuation of the probe light corresponding to the position from the surface of the landed droplet D in the optical axis direction of the irradiation light in the optical interference tomographic image to correctly distinguish the aggregation layer C and the non-aggregation layer from each other.

The probe light attenuation characteristic corresponding to the position from the surface of the landed droplet D in the optical axis direction of the irradiation light is different in accordance with the type of ink and can be obtained by a simulation or experiment and correction data can be generated on the basis of the probe light attenuation characteristic.

For example, in FIG. 6, the correction data is data for correcting the pixel brightness for each pixel decreasing as it goes from the position Z0 toward the position Z1 so that the pixel brightness becomes the brightness I0 regardless of the position Z. When the optical attenuation of the two-dimensional optical interference tomographic image is corrected, the two-dimensional correction data image which can be used as the correction data is generated. The generated correction data such as a correction data image is stored in the ROM 143.

Returning to FIG. 4, the optical attenuation correction unit 155 acquires the correction data by referring to the ROM 143 and adds the correction data for each pixel to the brightness value of the input expansion correction image to correct the attenuation of the probe light.

Here, it is desirable that the expansion correction image and the correction data image have the same image size. Since the same image size is used, the image sum of the expansion correction image and the correction data image is calculated. Accordingly, the optical attenuation correction process can be performed and the process can be simplified. However, the invention is not limited and a different image size may be used. When the image size is different, the optical attenuation correction unit 155 may correct the attenuation of the probe light by extracting the correction data of the corresponding position of the correction data image for each position of the pixel of the expansion correction image and adding the data to the pixel of the expansion correction image.

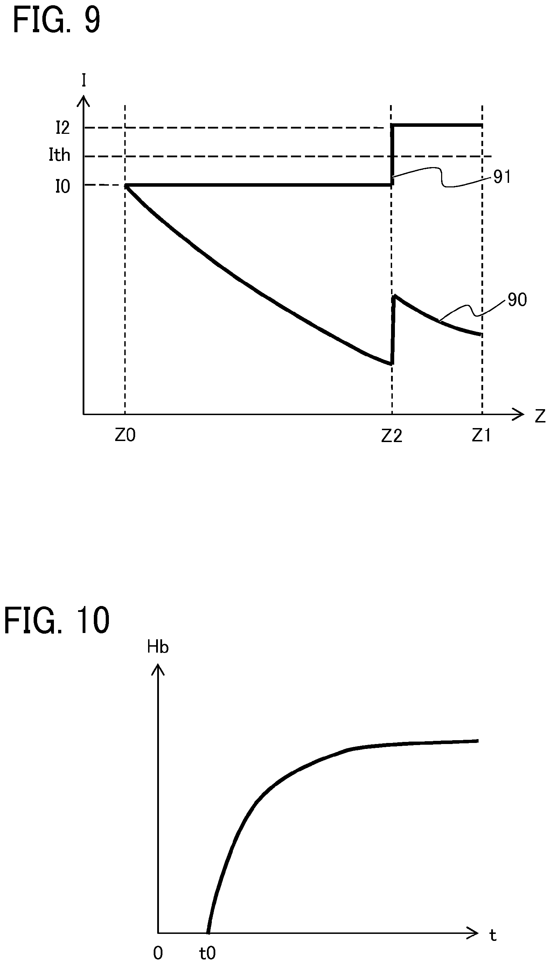

FIG. 9 is a graph describing an optical attenuation correction result of the optical attenuation correction unit 155. A plot 90 illustrates a change of the pixel brightness in the Z direction before correction. Meanwhile, a plot 91 illustrates a change of the pixel brightness in the Z direction after the correction of the optical attenuation by the optical attenuation correction unit 155. As illustrated in the drawings, in the plot 91, deterioration of the pixel brightness due to the attenuation of the probe light is corrected and the pixel brightness is the same in the region where the same aggregation state is assumed in the Z direction. Specifically, the pixel brightness of the region from the position Z0 corresponding to the non-aggregation layer to the position Z2 is the same at the brightness 10. Further, the pixel brightness of the region from the position Z2 corresponding to the aggregation layer C to the position Z1 is the same at the brightness I2 and the brightness I2 is larger than the brightness 10.

Returning to FIG. 4, the optical attenuation correction unit 155 performs the optical attenuation correction process on the entire input expansion correction image and outputs the corrected optical attenuation correction image to the characteristic value acquisition section 157. Further, the process of the optical attenuation correction unit 155 may not be performed when the attenuation of the probe light is little due to a small thickness of the landed droplet D in the optical axis direction of the irradiation light. In this case, the optical attenuation correction unit 155 may directly output the input expansion correction image to the characteristic value acquisition section 157.

The aggregation threshold value acquisition section 156 acquires an aggregation threshold value Ith for distinguishing the aggregation layer C and the non-aggregation layer from each other. The aggregation threshold value Ith is obtained in advance by an experiment or simulation and is stored in the ROM 143. The aggregation threshold value acquisition section 156 outputs the aggregation threshold value Ith acquired by referring to the ROM 143 to the characteristic value acquisition section 157.

The characteristic value acquisition section 157 acquires a characteristic value indicating the aggregation state of the landed droplet D. The characteristic value acquisition section 157 recognizes a pixel of which the brightness value is smaller than the aggregation threshold value Ith as a pixel corresponding to the non-aggregation layer and recognizes a pixel of which the brightness value is larger than the aggregation threshold value Ith as a pixel corresponding to the aggregation layer C (see FIG. 9). Then, the boundary pixel corresponding to the boundary between the aggregation layer C and the non-aggregation layer is specified and the position data of the interface between the aggregation layer C and the non-aggregation layer in the optical axis direction of the irradiation light can be acquired from the boundary pixel. Such position data is data indicating an aggregation position in the landed droplet D and can be used as the characteristic value indicating the aggregation state of the landed droplet D. Further, the thickness data of the aggregation layer C can be acquired from the position data of the interface between the aggregation layer and the non-aggregation layer and the position data of the interface between the sheet P and the ink in the landed droplet D. Such thickness data of the aggregation layer C can be also used as the characteristic value indicating the aggregation state of the landed droplet D.

Further, as described above, the characteristic value acquisition section 157 acquires the position data of the interface between the aggregation layer C and the non-aggregation layer in the optical axis direction of the irradiation light on the basis of the comparison with the aggregation threshold value Ith, but the acquiring method is not limited. For example, an image process based on an edge detection algorithm may be performed on the optical interference tomographic image such as an optical attenuation correction image to detect the edge of the optical interference tomographic image and the position of the detected edge in the optical axis direction of the irradiation light may be acquired as the position data of the interface between the aggregation layer C and the non-aggregation layer.

Further, the characteristic value acquisition section 157 can quantify the temporal change of the position of the interface between the aggregation layer C and the non-aggregation layer in the optical axis direction of the irradiation light by acquiring the characteristic value with time. Further, it is possible to quantify the two-dimensional or three-dimensional movement speed of the interface between the aggregation layer C and the non-aggregation layer, that is, the expansion speed of the aggregation layer C by differentiating the temporal change data of the position of the interface. Further, the one-dimensional expansion speed of the aggregation layer C in the optical axis direction of the irradiation light may be obtained.

FIG. 10 is a graph describing an example of the temporal change of the position of the interface between the aggregation layer C and the non-aggregation layer in the optical axis direction of the irradiation light. In other words, FIG. 10 illustrates a state in which the aggregation layer C expands one-dimensionally in the optical axis direction of the irradiation light. Further, the "position of the interface between the aggregation layer and the non-aggregation layer in the optical axis direction of the irradiation light" is an example of the characteristic value acquired by the characteristic value acquisition section 157.

In FIG. 10, a horizontal axis indicates a time t and a vertical axis indicates a position Hb of the interface between the aggregation layer C and the non-aggregation layer in the optical axis direction of the irradiation light. The position Hb indicates a surface of the sheet P in the landed droplet D when the value is 0 and indicates that the position moves close to the surface of the landed droplet D as the value increases.

The time 0 indicates a time at which the acquisition of the optical interference tomographic image starts and the time t0 indicates a time at which the ink is landed on the sheet P. As illustrated in FIG. 10, the interface between the aggregation layer C and the non-aggregation layer moves from the surface of the sheet P toward the surface of the landed droplet D with time after the ink is landed on the sheet P. When the aggregation layer C expands to that predetermined position, the expansion of the aggregation layer is saturated.

When the temporal change data of the position of the interface between the aggregation layer C and the non-aggregation layer of FIG. 10 is differentiated, the movement speed (the aggregation speed) of the interface between the aggregation layer C and the non-aggregation layer can be acquired and the expansion speed of the aggregation layer can be acquired. Further, such a speed measurement resolution matches the acquisition rate of the optical interference tomographic image by the measurement section 100. The acquisition rate can be adjusted by changing the hardware configuration of the process section 140 or the number of pixels of the optical interference tomographic image processed by the process section 140. Thus, it is possible to optimize the speed measurement resolution by adjusting the acquisition rate of the optical interference tomographic image using the measurement section 100 in response to the aggregation speed which is different for the ink type.

Returning to FIG. 4, the characteristic value acquisition section 157 outputs data indicating the acquired characteristic value to the characteristic value output device 158. The characteristic value output device 158 outputs the input data indicating the characteristic value to the display 160 and the display 160 displays the characteristic value. Alternatively, the characteristic value output device 158 may output data indicating a calculation result to an external device such as a personal computer (PC).

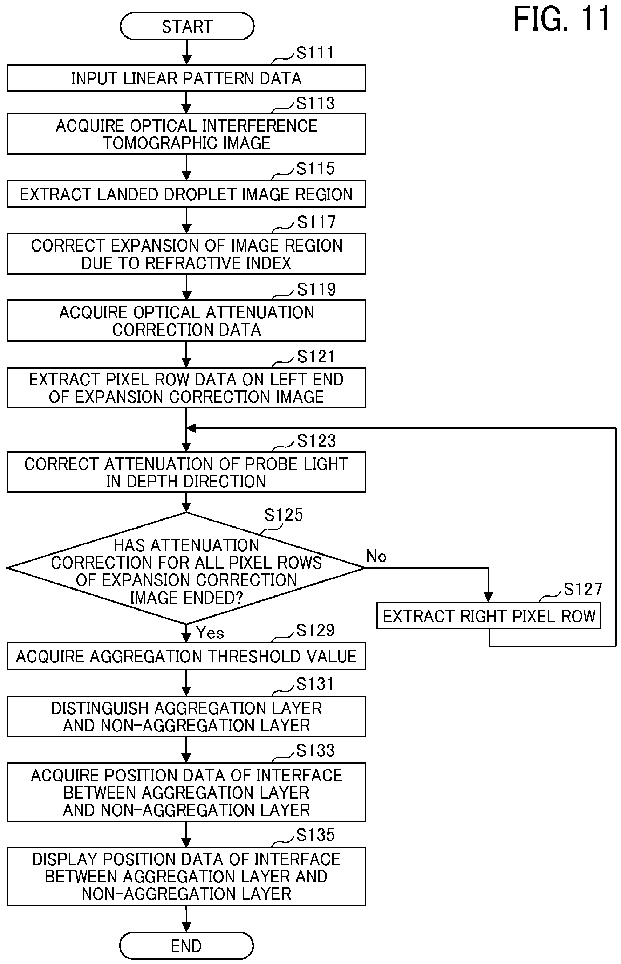

FIG. 11 is a flowchart showing an example of a process of the process section 140 according to the embodiment.

First, the input device 151 inputs the linear pattern data based on the interference light from the detector 130 and outputs the linear pattern data to the tomographic image acquisition section 152 (step Sill).

Next, the tomographic image acquisition section 152 performs inverse Fourier transform on the input linear pattern data to calculate the light intensity of the probe light for each relative position of the landed droplet D with respect to the reference mirror 125. Further, the tomographic image acquisition section 152 converts the relative position of the landed droplet D with respect to the reference mirror 125 into a distance in consideration of the refractive index of the ink and calculate the light intensity of the probe light for each position in the optical axis direction of the irradiation light.

The tomographic image acquisition section 152 calculates the light intensity of the probe light for each position in the Z direction and each scanning position in the X direction of the scanning optical section 114 and connects them to acquire the optical interference tomographic image (step S113). The tomographic image acquisition section 152 outputs data indicating the acquisition result to the landed droplet extraction section 153 and the characteristic value output device 158.

Next, the landed droplet extraction section 153 extracts only the image region corresponding to the landed droplet D from the input optical interference tomographic image (step S115). The landed droplet extraction section 153 outputs the landed droplet image corresponding to the landed droplet D extracted in the optical interference tomographic image to the expansion correction unit 154.

Next, the expansion correction unit 154 corrects the expansion of the optical interference tomographic image due to the refractive index of the landed droplet D in the input landed droplet image (step S117). For example, the expansion correction unit 154 decreases the distance of the landed droplet image in the optical axis direction of the irradiation light by dividing the distance by the refractive index of the landed droplet D to correct the expansion. Accordingly, it is possible to prevent deterioration of the characteristic value acquisition accuracy or the optical attenuation correction accuracy caused by an error of the position data in the optical axis direction of the irradiation light in the landed droplet D. The expansion correction unit 154 outputs the expansion correction image obtained by correcting the expansion of the landed droplet image to the optical attenuation correction unit 155.

Next, the optical attenuation correction unit 155 refers to the ROM 143 to acquire a correction data image (step S119). Further, step S119 may be performed in parallel with any one of steps Sill to S117.

Next, the optical attenuation correction unit 155 extracts the pixel row data of the left end of the input expansion correction image (step S121).

Next, the optical attenuation correction unit 155 extracts the correction data of the position corresponding to the pixel of the pixel row data from the correction data image and adds the correction data to the pixel of the pixel row data to correct the attenuation of the probe light (step S123).

Next, the optical attenuation correction unit 155 determines whether the probe light attenuation correction process for all pixel rows of the expansion correction image ends (step S125).

When the probe light attenuation correction process for all pixel rows of the expansion correction image does not end (step S125, No), the optical attenuation correction unit 155 extracts the pixel row on the right of the pixel row extracted by step S121 (step S127) and returns to step S123.

When the probe light attenuation correction process for all pixel rows of the expansion correction image ends (step S125, Yes), the aggregation threshold value acquisition section 156 acquires the aggregation threshold value Ith by referring to the ROM 143 and outputs the acquired aggregation threshold value Ith to the characteristic value acquisition section 157 (step S129). Further, the optical attenuation correction unit 155 outputs the optical attenuation correction image subjected to the correction process to the characteristic value acquisition section 157.

Next, the characteristic value acquisition section 157 acquires a characteristic value indicating the aggregation state of the landed droplet D. The characteristic value acquisition section 157 recognizes a pixel of which the brightness value is smaller than the aggregation threshold value Ith as a pixel corresponding to the non-aggregation layer and recognizes a pixel of which the brightness value is larger than the aggregation threshold value Ith as a pixel corresponding to the aggregation layer (step S131). Then, the boundary pixel corresponding to the boundary between the aggregation layer and the non-aggregation layer is specified. The characteristic value acquisition section 157 acquires the position data of the interface between the aggregation layer C and the non-aggregation layer in the optical axis direction of the irradiation light from the boundary pixel as the characteristic value indicating the aggregation state of the landed droplet D (step S133). The characteristic value acquisition section 157 outputs the acquired position data at the interface between the aggregation layer C and the non-aggregation layer in the optical axis direction of the irradiation light to the characteristic value output device 158.

Next, the characteristic value output device 158 outputs the position data of the interface between the aggregation layer C and the non-aggregation layer in the optical axis direction of the irradiation light to the display 160. The display 160 displays the position data of the interface between the input aggregation layer C and the non-aggregation layer in the optical axis direction of the irradiation light (step S135).

In this way, the process section 140 can acquire the characteristic value indicating the aggregation state of the landed liquid. Further, in the embodiment, an example has been described in which the process section 140 acquires the position data of the interface between the aggregation layer C and the non-aggregation layer in the optical axis direction of the irradiation light as the characteristic value. However, the shape data of the interface between the aggregation layer C and the non-aggregation layer may be acquired and the temporal change or the change speed of the interface shape may be acquired as the characteristic value.

As described above, in the recording apparatus such as an inkjet recording type image forming apparatus, a predetermined size of ink droplets are discharged from a recording head such as an inkjet head and are landed onto a recording medium such as a sheet so as to form a predetermined size of ink dots. These ink dots are simultaneously and continuously arranged in a plane direction or a solid direction to form an image. In order to form the image at a high speed, a one-pass type recording apparatus using a line head of a recording medium page width is used. However, since a time interval of landing the adjacent ink dots is shortened in the one-pass type recording apparatus, image quality deterioration such as beading or bleeding may occur due to the flow of the adjacent ink droplets.

In order to suppress the image quality deterioration, there is a case in which a step of coating the recording medium with a pre-treatment liquid is provided before the attachment of the ink droplet. By this step, particles such as pigments in the ink are quickly aggregated by the chemical and physical actions of the pre-treatment liquid and the ink to thicken the ink droplets. Accordingly, it is possible to prevent image quality deterioration by suppressing the flow of the adjacent ink droplets.

Meanwhile, the aggregation state of the ink droplet landed on the recording medium changes with time. In order for the pre-treatment liquid to act on the ink droplet, the component needs to move to the ink droplet. The degree of the aggregation state is determined in accordance with the movement amount and the reaction state of the component in the ink droplet. After the ink droplet is landed on the recording medium, the ink droplet is gradually aggregated. For this reason, when other ink droplets are attached adjacently while a certain ink droplet is aggregated, a case is considered in which the flow of the ink droplets cannot be sufficiently suppressed in accordance with the aggregation speed.

Since the productivity is high particularly in the one-pass type recording apparatus, it is preferable to convey the recording medium as fast as possible. For example, it is preferable to arrange the ink droplets at a shorter time interval and to aggregate the ink droplets within a shorter time. In order to aggregate the ink droplet with a shorter time, the component type and the addition concentration of the pre-treatment liquid are adjusted or the coating amount of the pre-treatment liquid onto the recording medium is adjusted.

In order to check whether the ink droplets are aggregated at a target time, it is preferable to evaluate the aggregation state of the ink droplet on the basis of how the component of the pre-treatment liquid moves to the ink droplet with time and promotes the aggregation.

In the embodiment, a characteristic value output device is provided to output the characteristic value indicating the aggregation state of the liquid and acquired by the optical interference tomographic image of the liquid acquired by the light reflected or scattered by the landed liquid after the liquid landed on the recording medium is irradiated with the light. By using such a characteristic value, the state of the liquid landed on the recording medium can be appropriately evaluated.

Further, in the embodiment, it is possible to quantify the temporal change of the position (the thickness of the aggregation layer) of the interface between the aggregation layer and the non-aggregation layer in the optical axis direction of the irradiation light by acquiring the characteristic value with time. Further, it is possible to quantify the two-dimensional or three-dimensional movement speed of the interface between the aggregation layer and the non-aggregation layer, that is, the expansion speed of the aggregation layer by differentiating the position data. By using such a characteristic value, the state of the liquid landed on the recording medium can be appropriately evaluated.

Incidentally, in the image forming apparatus 200, it is possible to change the light intensity of the scattered light with respect to the irradiation light for each particle diameter of the aggregate or each scattering particle by changing the wavelength of the light emitted from the light source 101. For example, when light of a shorter wavelength is emitted, the light intensity of the scattered light of the aggregate or the scattering particle having a small particle diameter increases as compared with the case of emitting light having a long wavelength. Further, when light of a longer wavelength is emitted, the light intensity of the scattered light of the aggregate or the scattering particle having a large particle diameter increases as compared with the case of emitting light having a short wavelength.

When there is a need to quantify a change of the particle diameter of the aggregate or scattering particle having a smaller diameter by using these, the light source 101 emitting light having a short wavelength may be used. Meanwhile, when there is a need to quantify a change of the particle diameter of the aggregate or scattering particle having a larger diameter, the light source 101 emitting light having a long wavelength may be used.

Further, the image forming apparatus 200 may include a light source emitting light beams of different wavelengths and simultaneously or non-simultaneously acquire the optical interference tomographic image for each of the light beams of different wavelengths of the landed droplet D in the same state. The image forming apparatus 200 can highly accurately acquire the shape or the interface position between the aggregation layer and the non-aggregation layer by using a wavelength average optical interference tomographic image obtained by averaging the optical interference tomographic image for each of a plurality of light beams of different wavelengths. Accordingly, the characteristic value indicating the aggregation state of the landed droplet D can be acquired and output with high accuracy.

### Second Embodiment

Next, an example of an image forming apparatus according to a second embodiment will be described. Further, a description of the same components as those of the above-described embodiment will be omitted.

In the embodiment, an image forming apparatus with recording heads of four colors of black (K), cyan (C), magenta (M), and yellow (Y) will be described, but the embodiment is not limited to the image forming apparatus with these recording heads. For example, an image forming apparatus further including recording heads corresponding to green (G), red (R), light cyan (LC) and/or other colors or an image forming apparatus including a recording head of only black (K) is provided. Here, in the description below, symbols given the suffixes K, C, M, and Y correspond to black, cyan, magenta, and yellow respectively.

Further, in the embodiment, as the recording medium, continuous paper (hereinafter, referred to as "roll paper Md") wound in a roll shape is used, but the recording medium is not limited to the roll paper. For example, the recording medium may be cut paper. Further, the recording medium includes plain paper, high quality paper, thin paper, thick paper, recording paper, roll paper, an overhead projector (OHP) sheet, a synthetic resin film, a metal thin film, and other materials capable of forming an image on the surface with ink. Here, the roll paper is continuous paper that is longer than standard. The roll paper includes continuous paper in which cuttable perforations are formed at predetermined intervals and continuous paper in which perforations are not formed. In a continuous form in which perforations are formed, a page is, for example, an area sandwiched by perforations at a predetermined interval.

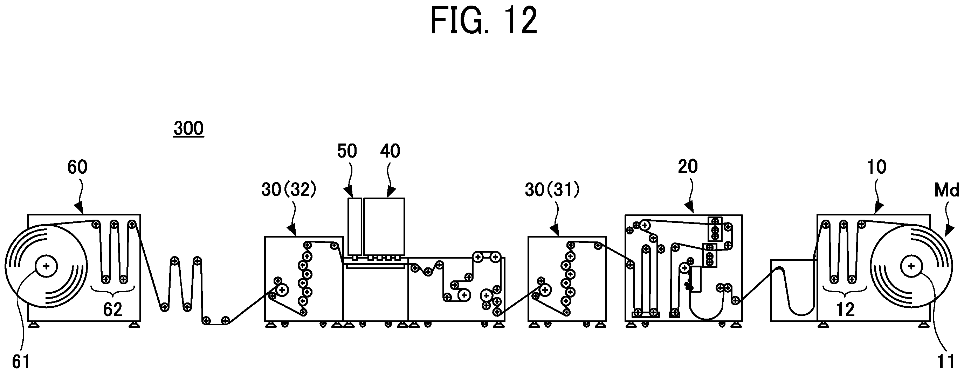

As illustrated in FIG. 12, an image forming apparatus 300 according to the embodiment includes a loading section 10 which loads a roll paper Md, a pre-treatment section 20 which performs a pre-treatment on the loaded roll paper Md, and a dryer 30 which dries the pre-treated roll paper Md. Further, the image forming apparatus 300 includes an image forming section 40 which forms an image on the surface of the roll paper Md, a post-treatment section 50 which performs a post-treatment on the roll paper Md having an image formed, and an unloading section 60 which unloads the post-treated roll paper Md. Further, the image forming apparatus 300 includes a print control unit 70 which controls the operation of the image forming apparatus 300.

The image forming apparatus 300 according to the embodiment loads the roll paper Md by the loading section 10 and pre-treats and dries the surface of the roll paper Md by the pre-treatment section 20 and the dryer 30. Further, the image forming apparatus 300 forms an image on the surface of the pre-treated and dried roll paper Md by the image forming section 40 and post-treats the roll paper Md having an image formed by the post-treatment section 50. Then, the image forming apparatus 300 winds up (discharges and unloads) the roll paper Md by the unloading section 60. Any operation of the image forming apparatus 300 is performed under the control of the print control unit 70.

Hereinafter, each configuration of the image forming apparatus 300 according to the embodiment will be described in detail.

### Configuration of Loading Section

The loading section 10 conveys the roll paper Md to the pre-treatment section 20. The loading section 10 includes, in the embodiment, a sheet feeding section 11 and a plurality of conveying rollers 12. The loading section 10 loads (moves) the roll paper Md wound on the sheet feeding roll of the sheet feeding section 11 by the conveying roller 12 so that the roll paper is conveyed to the pre-treatment section (platen) 20 to be described later.

### Configuration of Pre-Treatment Section

The pre-treatment section 20 treats the roll paper Md before an image is formed. The pre-treatment section 20 according to the embodiment applies, for example, the pre-treatment liquid by the amount of the predetermined pre-treatment liquid. In the embodiment, the pre-treatment section 20 pre-treats the surface of the roll paper Md loaded by the loading section 10 using the pre-treatment liquid.

Here, the pre-treatment is a treatment for uniformly coating the surface of the roll paper Md with a pre-treatment liquid (to be described later) having a function of aggregating ink.

The pre-treatment section 20 of the image forming apparatus 300 according to the embodiment may control the amount of the pre-treatment liquid to be applied by further using the resolution (the number of dots per unit area) of the image formed on the roll paper Md. Accordingly, the image forming apparatus 300 can coat the surface of the roll paper Md with the pre-treatment liquid having a function of aggregating ink before forming an image on the roll paper Md by using the pre-treatment section 20 when an image is formed on the roll paper Md other than the inkjet-type special paper. For this reason, the image forming apparatus 300 can reduce the occurrence of quality problems such as bleeding, concentration, color tone, and offset of a formed image and problems regarding water resistance, weather resistance, and other image fastness. For example, when the image forming apparatus 300 applies the pre-treatment liquid having a function of aggregating ink before forming an image on the roll paper Md by using the pre-treatment section 20, it is possible to improve the quality of the image formed.

Further, the image forming apparatus 300 may apply the pre-treatment liquid having a function of aggregating ink by the pre-treatment section 20 before forming an image on inkjet-type special paper.

In the pre-treatment section 20 of the image forming apparatus 300 according to the embodiment, as the pre-treatment method, for example, a blade coating method, a gravure coating method, a gravure offset coating method, a bar coating method, a roll coating method, a knife coating method, an air knife coating method, a comma coating method, a U comma coating method, an AKKU coating method, a smoothing coating method, a microgravure coating method, a reverse roll coating method, a roll coating method using four to five rolls, a dip coating method, a curtain coating method, a slide coating method, or a die coating method can be used.

Further, the pre-treatment section 20 according to the embodiment can use, for example, a treatment liquid containing a water-soluble aliphatic organic acid as the pre-treatment liquid. Here, the treatment liquid containing the water-soluble aliphatic organic acid is a treatment liquid for aggregating the water dispersible colorant. Further, the water-soluble aliphatic organic acid is an example of the "reactant".

Further, the pre-treatment section 20 according to the embodiment can adsorb ions onto the surface of the water dispersible colorant by applying an ionic substance such as a water-soluble aliphatic organic acid to the pre-treatment liquid. Accordingly, the pre-treatment section 20 can neutralize the surface charge of the water dispersible colorant. Further, the pre-treatment section 20 can strengthen an aggregation action by an intermolecular force and further aggregate the water-dispersible colorant.

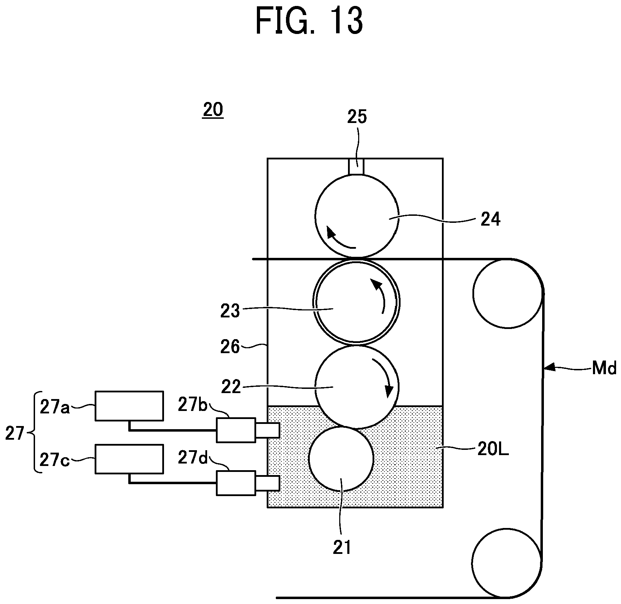

An example of the pre-treatment section 20 using a roll coating method will be described with reference to FIG. 13.

As illustrated in FIG. 13, the pre-treatment section 20 coats, in the embodiment, the surface of the roll paper Md loaded (conveyed) into the pre-treatment section 20 by the loading section 10 (see FIG. 12) with the stored pre-treatment liquid 20L.

Specifically, the pre-treatment section 20 first transfers the pre-treatment liquid 20L onto the surface of the coating roller 23 as a thin film by a stirring (supply) roller 21 and a thin film (transfer) roller 22. Next, the pre-treatment section 20 is pressed against a platen roller 24 rotating the coating roller 23 so as to rotate the coating roller 23. At this time, the pre-treatment section 20 can coat the surface of the roll paper Md with the pre-treatment liquid 20L by conveying the roll paper Md to a gap between the coating roller 23 and the platen roller 24.

Further, the pre-treatment section 20 controls a nip pressure applied when applying the pre-treatment liquid (a pressure applied to a contact position between the coating roller 23 and the platen roller 24) by using the pressure adjuster 25. Accordingly, the pre-treatment section 20 can control (change) the coating amount (a film thickness, a liquid amount, an adhesion amount, and a dry adhesion amount) of the pre-treatment liquid 20L by changing the nip pressure using the pressure adjuster 25.

Further, the pre-treatment section 20 controls the rotation speed of the coating roller 23 and the platen roller 24. Accordingly, the pre-treatment section 20 can control the coating amount of the pre-treatment liquid 20L by changing the rotation speed of the coating roller 23. Further, the pre-treatment section 20 may control the rotation speed of the coating roller 23 by controlling, for example, an operation of a drive source (a drive motor) for driving the coating roller 23 and the platen roller 24.

Here the pre-treatment section 20 includes a reactant concentration adjustment section 27. The reactant concentration adjustment section 27 is a mechanism which adjusts the concentration of the reactant in the pre-treatment liquid 20L by injecting a reactant or solvent into a pre-treatment liquid tank 26 storing the pre-treatment liquid 20L. Further, there is a case in which the reactant is a powdery water-soluble aliphatic organic acid. However, in the embodiment, an example of a reactant in which the powdery water-soluble aliphatic organic acid is melted in a solvent to be a liquid will be described. In other words, an example of a liquid reactant which can be injected into a cylinder will be described.

The reactant concentration adjustment section 27 includes a reactant tank 27a, a reactant cylinder 27b, a solvent tank 27c, and a solvent cylinder 27d. The reactant cylinder 27b is an injection mechanism which injects the reactant stored in the reactant tank 27a into the pre-treatment liquid tank 26 storing the pre-treatment liquid 20L. An injection nozzle of a leading end of the reactant cylinder 27b communicates with the inside of the pre-treatment liquid tank 26 so that the reactant can be injected into the pre-treatment liquid tank 26.

Similarly, the solvent cylinder 27d is an injection mechanism which injects the solvent stored in the solvent tank 27c into the pre-treatment liquid tank 26. An injection nozzle of a leading end of the solvent cylinder 27d communicates with the inside of the pre-treatment liquid tank 26 so that the solvent can be injected into the pre-treatment liquid tank 26.

The reactant or solvent is injected into the pre-treatment liquid tank 26 and is stirred by the stirring roller 21. Accordingly, it is possible to control (change) the concentration of the reactant of the pre-treatment liquid 20L. For example, when the reactant is injected, the concentration of the reactant of the pre-treatment liquid 20L increases. When the solvent is injected, the concentration of the reactant of the pre-treatment liquid 20L decreases.

The pre-treatment liquid tank 26 is provided with a sensor detecting a storage amount of the pre-treatment liquid 20L. It is possible to control the concentration of the reactant by recognizing a relationship between the concentration of the reactant of the pre-treatment liquid 20L and the injection amount of the reactant and the solvent for each storage amount of the pre-treatment liquid 20L in advance and adjusting the injection amount of the reactant and the solvent in response to the storage amount of the pre-treatment liquid 20L.

As described above, in the pre-treatment section 20 of the image forming apparatus 300 according to the embodiment, the pre-treatment liquid 20L can be uniformly applied on the surface of the roll paper Md by using the coating roller 23. For example, the pre-treatment section 20 according to the embodiment can uniformly and thinly coat the roll paper Md with the pre-treatment liquid 20L even in the case of the pre-treatment liquid 20L having relatively high viscosity.

In the pre-treatment section 20 according to the embodiment, since the pre-treatment liquid 20L can be uniformly and thinly applied onto the roll paper Md, bleeding of the image formed thereafter can be reduced. Further, in the pre-treatment section 20 according to the embodiment, since the pre-treatment liquid 20L can be uniformly and thinly applied onto the roll paper Md and bleeding of the image formed can be reduced, the image quality can be improved.

In the pre-treatment section 20 of the image forming apparatus 300 according to the embodiment, it is possible to control the coating amount (a film thickness, a liquid amount, an adhesion amount, and a dry adhesion amount) of the pre-treatment liquid applied by the coating roller 23. For this reason, in the pre-treatment section 20 according to the embodiment, it is possible to coat the surface of the roll paper Md with the pre-treatment liquid 20L at a coating amount suitable for the image formation and the post-treatment.

In the pre-treatment section 20 of the image forming apparatus 300 according to the embodiment, it is possible to control the coating amount of the pre-treatment liquid on the basis of the characteristic value acquired by the measurement section 100 or the kind of recording medium such as the roll paper Md by controlling the coating amount of the pre-treatment liquid to be applied using the coating roller 23. Accordingly, for example, the quality of the image formed by the image forming apparatus 300 can be improved and the image formation productivity can be secured.

In the pre-treatment section 20 of the image forming apparatus 300 according to the embodiment, since the reactant concentration adjustment section 27 is provided, it is possible to control the concentration of the reactant of the pre-treatment liquid 20L by injecting the reactant or solvent into the pre-treatment liquid tank 26 storing the pre-treatment liquid 20L. Since the concentration of the reactant is controlled on the basis of the characteristic value acquired by the measurement section 100, for example, the quality of the image formed by the image forming apparatus 300 can be improved and the image formation productivity can be secured.

### Configuration of Dryer

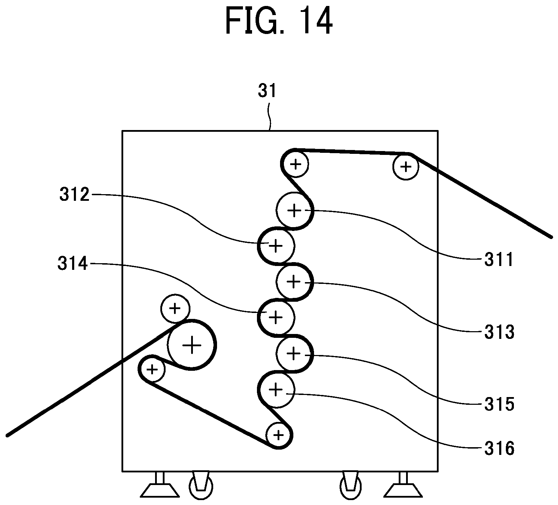

The dryer 30 dries the roll paper Md by heating. The dryer 30 includes, as illustrated in FIG. 12, in the embodiment, a pre-treatment-liquid drying section 31 which dries the roll paper Md pre-treated by the pre-treatment section 20 and a post-treatment liquid drying section 32 which dries the roll paper Md post-treated by the post-treatment section 50. Referring to FIG. 14, the configuration of the pre-treatment-liquid drying section 31 will be described.

As illustrated in FIG. 14, the pre-treatment-liquid drying section 31 uses a plurality of heat rollers 311 to 316 in the embodiment in order to improve a drying effect.

The pre-treatment-liquid drying section 31 heats, the heat roller (311) to, for example, 40 to 100°C and brings the surface of the roll paper Md coated with the pre-treatment liquid into contact with the heat roller (311). Accordingly, the pre-treatment-liquid drying section 31 heats the surface of the roll paper Md coated with the pre-treatment liquid by the heat roller (311) to dry the moisture of the pre-treatment liquid and dry (the pre-treatment liquid of) the roll paper Md.

Since the configuration of the post-treatment liquid drying section 32 is the same as that of the pre-treatment-liquid drying section 31, a description will be omitted.

Further, the heater of the roll paper Md in the dryer 30 is not limited to the heat roller. For example, the dryer 30 can use an infrared drying method, a microwave drying method, a warm air drying method, and other drying methods. Further, the dryer 30 may use a drying method obtained by a combination of a plurality of drying methods. Further, the dryer 30 may pre-heat (heat) the roll paper Md before the pre-treatment section 20 applies the pre-treatment liquid (a pre-heating step).

### Configuration of Image Forming Section

The image forming section 40 forms an image on the roll paper Md. In the embodiment, the image forming section 40 discharges ink to the roll paper Md dried by the dryer 30 and lands the ink onto the surface of the roll paper Md so that an image is formed on the roll paper Md.

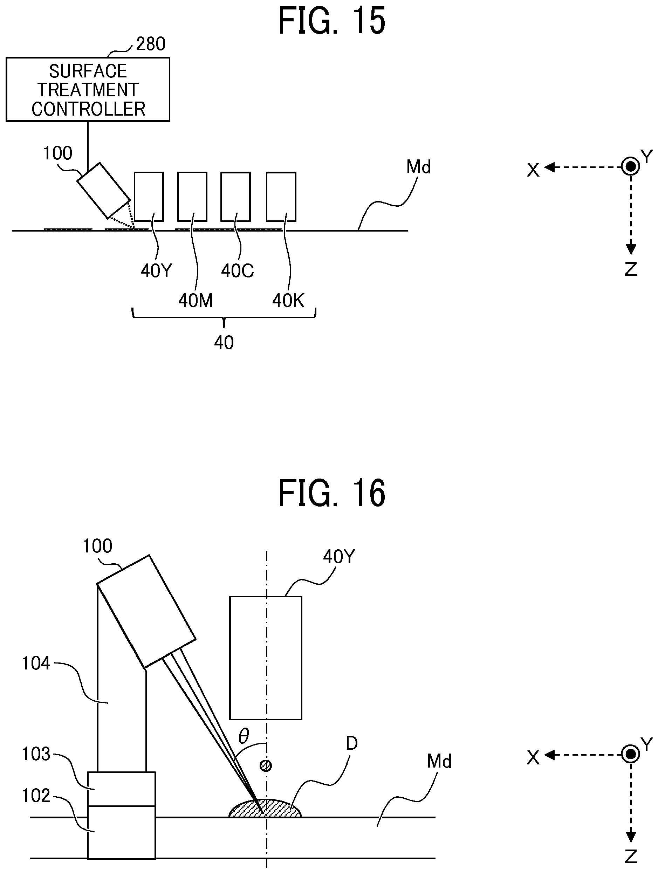

FIG. 15 is a diagram describing an example of a configuration of the image forming section 40 according to the embodiment. The image forming section 40 includes a recording head unit 40K, a recording head unit 40C, a recording head unit 40M, and a recording head unit 40Y. The recording head units are arranged in order of the recording head unit 40K, the recording head unit 40C, the recording head unit 40M, and the recording head unit 40Y from the upstream side in the X direction. Each recording head unit is electrically connected to a recording head driver of the print control unit 70 and is able to input a drive voltage waveform from the recording head driver to discharge ink.

The recording head unit 40K discharges ink of black (K) to the roll paper Md conveyed in the X direction so that the ink is landed on the surface of the roll paper Md. The recording head unit 40C discharges ink of cyan (C) to the roll paper Md conveyed in the X direction so that the ink is landed on the surface of the roll paper Md. The recording head unit 40M discharges ink of magenta (M) to the roll paper Md conveyed in the X direction so that the ink is landed on the surface of the roll paper Md. The recording head unit 40Y discharges ink of yellow (Y) to the roll paper Md conveyed in the X direction so that the ink is landed on the surface of the roll paper Md.

For example, in the recording head unit 40K, four recording heads 40K-1, 40K-2, 40K-3, and 40K-4 are arranged in a zigzag shape in the Y direction. Each recording head is a full line type recording head in which a nozzle is arranged in the Y direction. Other recording head units 40C, 40M, and 40Y also have the same configuration as that of the recording head unit 40K.

Since the recording head unit has the above-described configuration, the image forming section 40 can form a color image in the entire area in the Y direction of the image forming region (the print region) of the roll paper Md.

Meanwhile, the measurement section 100 is provided, as illustrated in FIG. 15, on the downstream side of the image forming section 40 in the X direction. After the pre-treatment liquid is applied on the roll paper Md by the pre-treatment section 20, the image forming section 40 lands ink onto the roll paper Md dried by the pre-treatment-liquid drying section 31. The measurement section 100 irradiates a predetermined landed droplet of the roll paper Md with the irradiation light and acquires an optical interference tomographic image by the light reflected or scattered from the landed droplet. Then, the measurement section 100 outputs the characteristic value indicating the aggregation state of the landed droplet and acquired on the basis of the optical interference tomographic image to the surface treatment controller 280.

The surface treatment controller 280 controls at least one of the concentration of the reactant contained in the pre-treatment liquid and the coating amount of the pre-treatment liquid on the roll paper Md by the pre-treatment section 20 on the basis of the characteristic value indicating the aggregation state of the landed droplet input from the measurement section 100. Accordingly, at least one of the surface treatment strength and the surface treatment amount of the roll paper Md is controlled. The function configuration of the surface treatment controller 280 will be described later.

FIG. 16 is a diagram describing an example of an arrangement of the recording head unit 40Y and the measurement section 100 according to the embodiment. A base member 102 is an elongated gate-shaped member that is long in the Y direction and is disposed so that the roll paper Md is located at a gap portion of the gate so as not to contact the roll paper Md. An electric slider 103 capable of sliding a table in the Y direction is fixed to the surface of the base member 102. An inclined base 104 having a slope inclined by an angle θ with respect to the Z direction is fixed to the slide table of the electric slider 103. The measurement section 100 is fixed t the slope of the inclined base 104.

By the movement of the slide table of the electric slider 103, the measurement section 100 is movable in the Y direction so that the measurement position in the Y direction can be changed.

Further, since the measurement section 100 is fixed to the slope of the inclined base 104, the optical axis of the irradiation light is inclined with respect to the Z direction by an angle θ. Accordingly, the measurement section 100 can irradiate the landed droplet D with light without any interference with the recording head units 40Y, 40M, 40C, and 40K and receive light reflected or scattered by the landed droplet D.

Further, in addition to the above-described configuration or instead of the electric slider 103, an electric slider changing the position of the measurement section 100 in the X direction may be provided and the measurement position in the X direction can be changed. In this case, for example, in the measurement section 100, the irradiation light is scanned in the Y direction by the scanning optical section 114 and the optical interference tomographic image at a predetermined time is acquired. Then, the measurement section 100 is moved to the downstream side in the X direction by the electric slider in synchronization with the conveying of the roll paper Md and the optical interference tomographic image is acquired with time. In this way, when the optical interference tomographic image is acquired, the optical interference tomographic image at the same position as the landed droplet D can be acquired while the roll paper Md is conveyed. Then, it is possible to evaluate a temporal change of the characteristic value at the same position of the landed droplet D in the conveyed roll paper Md.

Meanwhile, for example, when the irradiation light is scanned in the X direction by the scanning optical section 114 of the measurement section 100 and the scanning of the irradiation light is synchronized with the conveying of the roll paper Md, the temporal change of the characteristic value at a predetermined position of the landed droplet D can be acquired as the optical interference tomographic image and be evaluated.

### Configuration of Post-Treatment Section

Returning to FIG. 12, the post-treatment section 50 treats the roll paper Md having an image formed. In the embodiment, the post-treatment section 50 post-treats the surface of the roll paper Md having an image formed by the image forming section 40 by the use of the post-treatment liquid. The post-treatment section 50 is disposed, in the embodiment, on the downstream side of the image forming section 40 in the X direction. Further, in the post-treatment section 50, the recording heads are arranged in a zigzag shape in the Y direction similarly to the image forming section 40. Further, the post-treatment section 50 controls the discharge amount of the post-treatment liquid by controlling a drive waveform input to the recording head. Accordingly, the post-treatment section 50 can discharge the post-treatment liquid to the entire area in the Y direction of the image forming region of the roll paper Md by using the recording head.

Here, the post-treatment is a treatment for discharging (depositing) a post-treatment liquid (described later) onto the roll paper Md. The post-treatment liquid is formed in a shape such as a spot shape or a stripe shape. Accordingly, the roll paper Md having an image formed can improve scratch resistance, glossiness, and storage stability (water resistance, light resistance, and gas resistance).

The post-treatment section 50 according to the embodiment can use a treatment liquid containing a component capable of forming a transparent protection layer on the roll paper Md as the post-treatment liquid. The treatment liquid containing the component capable of forming the transparent protection layer is, for example, a treatment liquid containing a water-dispersible resin (resin), a water-soluble organic solvent (wetting agent), a penetrant, a surfactant, water, and/or other components if necessary. Further, the post-treatment liquid may be a resin composition and/or a thermoplastic resin containing a component that is polymerized by ultraviolet irradiation. Further, the post-treatment liquid is preferably a thermoplastic resin emulsion in order to improve the gloss and fixability. Accordingly, the post-treatment section 50 can increase the glossiness of the surface of the roll paper Md having an image formed or protect the surface of the roll paper Md with a resin layer depending on the method of ejection (application).

### Configuration of Unloading Section

The unloading section 60 unloads (discharges) the roll paper Md having an image formed. As illustrated in FIG. 12, the unloading section 60 includes, in the embodiment, a storage section 61 and a plurality of conveying rollers 62. The unloading section 60 winds and holds the roll paper Md having an image formed around the storage roll of the storage section 61 by using the conveying roller 62.

Further, when a pressure acting on the roll paper Md increases at the time of winding the roll paper Md on the storage roll of the storage section 61, a dryer further drying the roll paper Md may be provided immediately before a winding position in order to prevent another image from being transferred to the back surface of the roll paper Md.

### Configuration of Surface Treatment Controller

As described above, the surface treatment controller 280 controls at least one of the coating amount of the pre-treatment liquid on the roll paper Md and the concentration of the reactant contained in the pre-treatment liquid by the pre-treatment section 20 on the basis of the characteristic value indicating the aggregation state of the landed droplet input from the measurement section 100.

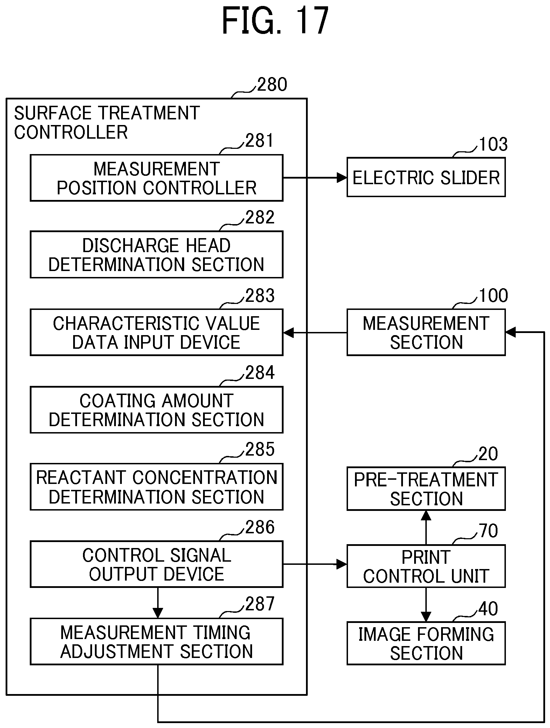

FIG. 17 is a diagram illustrating an example of a component of the surface treatment controller 280 as a functional block. All or part of each functional block can be realized as hardware by wired logic or can be realized by the CPU executing a program stored in the ROM with the RAM as a work area.

The surface treatment controller 280 includes a measurement position controller 281, a discharge head determination section 282, a characteristic value data input device 283, a coating amount determination section 284, a reactant concentration determination section 285, a control signal output device 286, and a measurement timing adjustment section 287.

The measurement position controller 281 is electrically connected to the electric slider 103 and outputs a control signal to the electric slider 103 so that a driving unit such as a motor of the electric slider 103 is driven. Accordingly, the position of the measurement section 100 in the Y direction is changed and the measurement section 100 is moved to a predetermined measurement position in the Y direction to be stopped at that position. As the measurement position, a predetermined measurement position may be determined in advance. Alternatively, a desired measurement position may be input from a user via an operation panel of the image forming apparatus.

The discharge head determination section 282 determines a recording head unit discharging ink for measurement among the recording head units 40K, 40C, 40M, and 40Y of the image forming section 40. A signal indicating the determined recording head unit is output to the control signal output device 286. When the recording head unit is changed, for example, the ink color of the landed droplet can be changed and the aggregation state for each ink color can be evaluated.

During the measurement, in the recording head unit, one droplet of ink is discharged from one nozzle at a position corresponding to the measurement position in the Y direction so as to be landed on the roll paper Md. Here, the number of nozzles may not be one. For example, ink may be discharged from a plurality of nozzles and the characteristic value indicating the aggregation state of the landed droplets may be acquired while changing the measurement position by the measurement position controller 281. In this case, the largest or smallest characteristic value of the acquired characteristic values may be the characteristic value for the surface treatment control and the average value may be the characteristic value for the surface treatment control. Further, ink may be landed at the same measurement position a plurality of times and the aggregation state of the landed droplet laminated in a layer shape may be measured. Furthermore, the drop amount of the landed droplet D may be changed in response to the time resolution or the spatial resolution of the measurement section 100. For example, as the spatial resolution of the measurement section 100 becomes lower, the drop amount of the landed droplet D increases.

The characteristic value data input device 283 is electrically connected to the process section 140 of the measurement section 100, inputs the characteristic value indicating the aggregation state of the landed droplet D and acquired by the measurement section 100, and outputs the data to the coating amount determination section 284 and/or the reactant concentration determination section 285.

The coating amount determination section 284 determines a coating amount in response to the characteristic value indicating the aggregation state of the landed droplet D and outputs a signal indicating the determined coating amount to the control signal output device 286. For example, when the position of the interface between the aggregation layer C and the non-aggregation layer in the optical axis direction of the irradiation light is set as the characteristic value, the coating amount is determined in response to a difference of the position of the interface with respect to the reference value.

For the reference value of the interface position, for example, when the image forming apparatus 300 is operated first in the morning, the position data of the interface between the aggregation layer C and the non-aggregation layer acquired by the measurement section 100 can be used. Then, for example, when the interface position acquired in the afternoon at that day after some time elapses is different from the reference value, the coating amount determination section 284 determines the coating amount so as to approach the reference value.

For such data of the reference value, for example, when the image forming apparatus 300 is operated first, the position data of the interface between the aggregation layer C and the non-aggregation layer is acquired and is stored in the RAM of the surface treatment controller 280. The coating amount determination section 284 can acquire data of the reference value by referring to the RAM.

When the pre-treatment section 20 applies the pre-treatment liquid by the determined coating amount, for example, the temporal change of the aggregation characteristic is corrected so that the temporal change of the image quality of the image forming apparatus 300 can be corrected. Further, since the high image formation speed is maintained, the image formation productivity of the image forming apparatus 300 can be secured.

Meanwhile, the reactant concentration determination section 285 determines a reactant concentration in response to the characteristic value indicating the aggregation state of the landed droplet D and outputs a signal indicating the determined reactant concentration to the control signal output device 286. Since the determination method is the same as that of the coating amount determination section 284, a description will be omitted.

The control signal output device 286 outputs a control signal to the print control unit 70 on the basis of the input signal from the discharge head determination section 282 and discharges ink from the determined recording head unit in the image forming section 40. Further, the control signal output device 286 outputs a synchronization signal to the measurement timing adjustment section 287 in synchronization with the output of the control signal for discharging ink from the recording head unit.

Further, the control signal output device 286 outputs a control signal to the print control unit 70 on the basis of the input signal from the coating amount determination section 284 and causes the pre-treatment section 20 to apply the pre-treatment liquid so that the coating amount becomes the determined coating amount. Alternatively, a control signal is output to the print control unit 70 on the basis of the input signal from the reactant concentration determination section 285, the reactant concentration of the pre-treatment liquid is adjusted by the pre-treatment section 20 so that the reactant concentration becomes the determined reactant concentration, and the adjusted pre-treatment liquid is applied.

Any one or both of the coating amount and the reactant concentration may be controlled. When any one of them is controlled, which one to control is determined in advance.

Further, the control of the coating amount is an example of the "control of the surface treatment amount" and the control of the reactant concentration is an example of the "control of the surface treatment strength".

The measurement timing adjustment section 287 outputs a measurement trigger signal to the measurement section 100 at a predetermined timing with respect to a synchronization signal input from the control signal output device 286. The measurement section 100 irradiates the landed droplet D with the irradiation light in response to the trigger signal and acquires the optical interference tomographic image of the landed droplet D. By the trigger signal of the measurement timing adjustment section 287, the measurement section 100 can acquire the optical interference tomographic image at a predetermined time after the landed droplet D is landed on the roll paper Md and can acquire the characteristic value indicating the aggregation state.

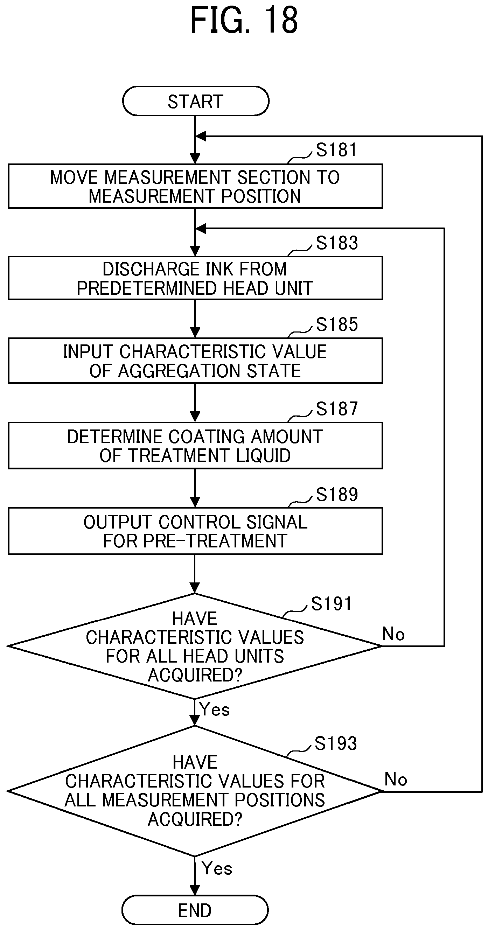

FIG. 18 is a flowchart illustrating an example of a process of the surface treatment controller 280. Further, in FIG. 18, for simple description, an example in which the surface treatment controller 280 determines and controls the coating amount in response to the characteristic value acquired by the measurement section 100 will be described.

First, the measurement position controller 281 outputs a control signal to the electric slider 103 so that the position of the measurement section 100 in the Y direction is changed and the measurement section 100 is moved to a predetermined measurement position in the Y direction to be stopped at that position (step S181).

Next, the discharge head determination section 282 determines the recording head unit discharging ink for measurement among the recording head units 40K, 40C, 40M, and 40Y of the image forming section 40. The discharge head determination section 282 outputs a signal indicating the determined recording head unit to the control signal output device 286. The control signal output device 286 outputs a control signal to the print control unit 70 on the basis of the input signal and discharges ink from the determined recording head unit in the image forming section 40 (step S183). Further, the control signal output device 286 outputs a synchronization signal to the measurement timing adjustment section 287 in synchronization with a signal for discharging ink from the recording head unit. The measurement timing adjustment section 287 outputs a measurement trigger signal to the measurement section 100 at a predetermined timing with respect to the input synchronization signal.

Next, the characteristic value data input device 283 inputs a characteristic value based on the optical interference tomographic image of the landed droplet D acquired by the measurement section 100 in response to the trigger signal and outputs that value to the coating amount determination section 284 (step S185).

Next, the coating amount determination section 284 determines a coating amount in response to the input characteristic value and outputs a signal indicating the determined coating amount to the control signal output device 286. For example, when the position of the interface between the aggregation layer C and the non-aggregation layer in the optical axis direction of the irradiation light is acquired as the characteristic value, the coating amount is determined in response to a difference of the position data of the interface with respect to the reference value (step S187).

Next, the control signal output device 286 outputs a control signal to the print control unit 70 on the basis of an input signal and performs the pre-treatment liquid coating process by the pre-treatment section 20 so that the coating amount becomes the determined coating amount (step S189).

Next, the discharge head determination section 282 determines whether the characteristic values for all head units are acquired (step S191). When the characteristic values for all head units are not acquired (step S191, No), the routine returns to step S183 to change the head unit discharging the ink and to perform the process from step S183. Further, the head unit for acquiring the characteristic value is determined in advance.

Meanwhile, when the characteristic values of all head units are acquired (step S191, Yes), the discharge head determination section 282 determines whether the characteristic values are acquired at all measurement positions (step S193). When the characteristic values are not acquired at all measurement positions (step S193, No), the routine returns to step S181 to change the measurement position and perform the process from step S181. Further, the measurement position for acquiring the characteristic value is determined in advance. Meanwhile, when the characteristic values at all measurement positions are acquired (step S193, Yes), the process ends.

In this way, the surface treatment controller 280 can control the coating amount of the pre-treatment liquid on the roll paper Md by the pre-treatment section 20 on the basis of the characteristic value indicating the aggregation state of the landed droplet input from the measurement section 100. Further, an example in which the surface treatment controller 280 determines and adjusts the coating amount in response to the characteristic value acquired by the measurement section 100 has been described, but the same applies to a case in which the reactant concentration is determined and adjusted. The same applies to a case in which the surface treatment controller 280 determines and adjusts both the coating amount and the reactant concentration.

In the method of determining the coating amount or the reactant concentration, the characteristic value may be acquired by the measurement section 100 while changing the coating amount or the reactant concentration in advance and data obtained by correlating the coating amount and the reactant concentration with the characteristic value may be stored in a ROM. In the surface treatment control of the surface treatment controller 280, the coating amount determination section 284 may acquire the coating amount by referring to the ROM in response to the acquired characteristic value and the reactant concentration determination section 285 may acquire the reactant concentration by referring to the ROM in response to the acquired characteristic value.

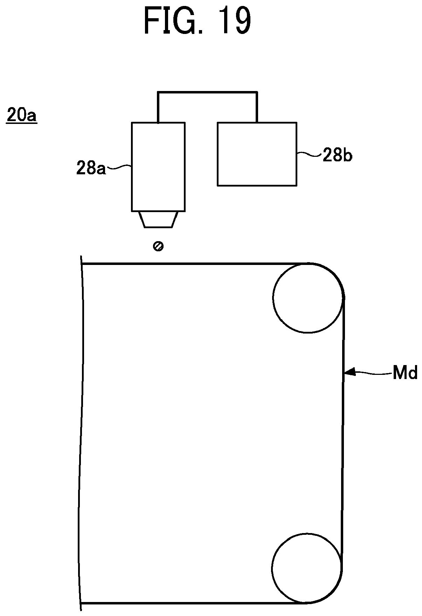

In the description above, a device that uses the roll coating method has been described as the pre-treatment section 20, but the invention is not limited. For example, the pre-treatment section may include a discharge head which discharges a pre-treatment liquid. Then, the pre-treatment liquid may be discharged to at least one surface of the roll paper Md by the discharge head so that one surface is coated with the pre-treatment liquid. Here, FIG. 19 is a diagram describing an example of a configuration of a pre-treatment section 20a including a discharge head discharging a pre-treatment liquid. FIG. 19 illustrates a device in which the pre-treatment liquid stored in a treatment liquid tank 28b is discharged from a discharge head 28a to the roll paper Md to perform a coating process. An electric slider moving the discharge head 28a in the Y direction may be provided and the coating position of the pre-treatment liquid by the discharge head 28a may be changed in the Y direction. When the pre-treatment liquid is applied by the discharge head 28a, for example, the pre-treatment liquid can be applied by the amount needed for a required position and the amount of the pre-treatment liquid can be decreased.

As described above, in the embodiment, the surface treatment controller 280 controls at least one of the concentration of the reactant contained in the pre-treatment liquid and the coating amount of the pre-treatment liquid on the roll paper Md by the pre-treatment section 20 on the basis of the characteristic value indicating the aggregation state of the landed droplet input from the measurement section 100. Accordingly, it is possible to stabilize the quality of the image formed by the image forming apparatus 300 by correcting the deviation of the aggregation characteristic with respect to the reference and the temporal change and reducing the bleeding of the image with such control. Further, since it is possible to rapidly form the image while securing the image quality, the image formation productivity of the image forming apparatus 300 can be secured.

Further, the other effects are the same as those of the above-described embodiment.

### Third Embodiment

Next, an example of an image forming apparatus according to a third embodiment will be described. Further, a description of the same component as that of the above-described embodiment will be omitted.

In the first embodiment, an example of the image forming apparatus 200 including the optical attenuation correction unit 155 and comparing the brightness value of the pixel of the optical interference tomographic image obtained by correcting the attenuation of the probe light with the aggregation threshold value to correctly distinguish the aggregation layer C and the non-aggregation layer from each other in the optical interference tomographic image has been described.

In contrast, an image forming apparatus 200a according to the embodiment is an apparatus for correctly distinguishing the aggregation layer C and the non-aggregation layer from each other in the optical interference tomographic image by comparing the acquired pixel brightness of the optical interference tomographic image with the aggregation threshold value different for each position in the optical axis direction of the irradiation light in the landed droplet D.

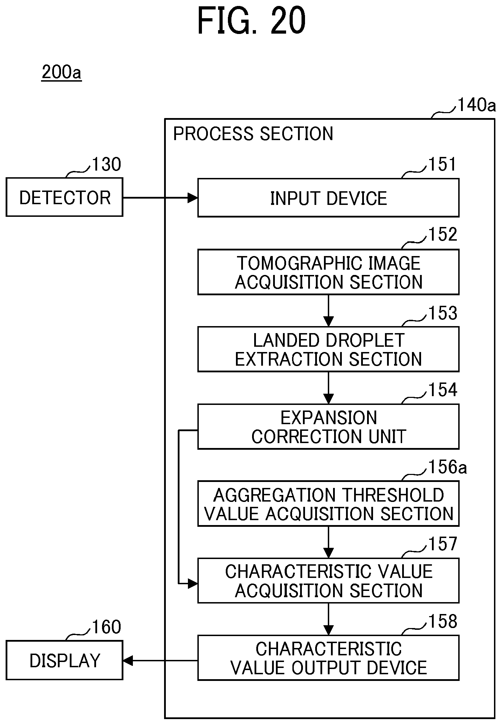

FIG. 20 is a diagram illustrating an example of a component of a process section 140a of an image forming apparatus 200a according to the embodiment as a functional block. The process section 140a includes an aggregation threshold value acquisition section 156a.

The aggregation threshold value acquisition section 156a acquires an aggregation threshold value Ith (Z) for distinguishing the aggregation layer C and the non-aggregation layer from each other. Further, the aggregation threshold value Ith (Z) is a threshold value which is different in response to the position from the surface of the landed droplet D in the optical axis direction of the irradiation light.

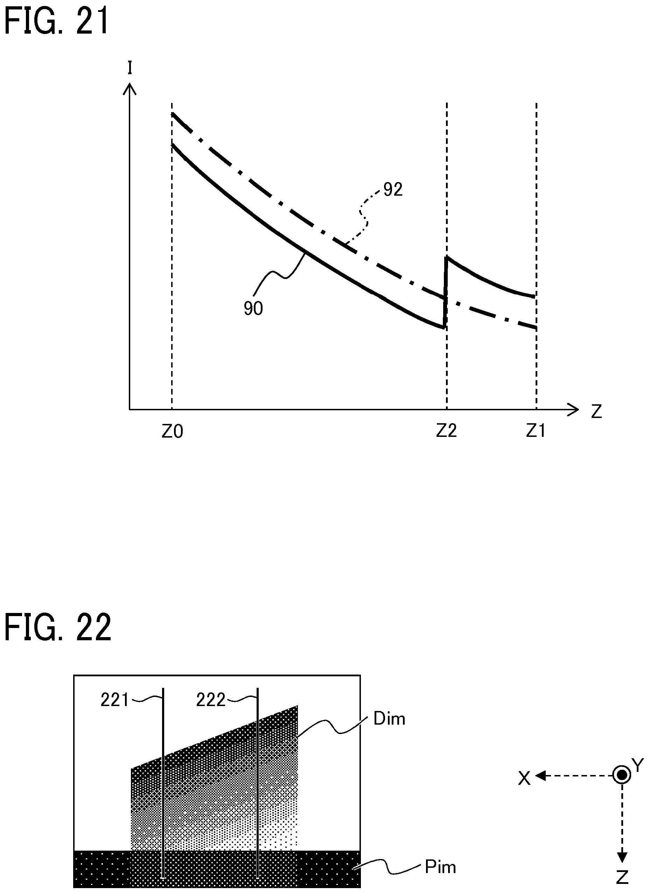

FIG. 21 is a graph describing an example of the aggregation threshold value Ith (Z). Similarly to FIG. 8, in FIG. 21, a horizontal axis indicates the position Z in the Z direction and a vertical axis indicates the brightness I of the pixel of the optical interference tomographic image. Further, the position Z0 indicates the surface of the landed droplet D and the position Z1 indicates the surface of the sheet P in the landed droplet D. Further, the position Z2 indicates the interface between the aggregation layer C and the non-aggregation layer. The plot 90 indicates the pixel brightness changing in response to the position from the surface of the landed droplet D in the optical axis direction of the irradiation light. Meanwhile, the plot 92 indicates the aggregation threshold value Ith (H) which is different in response to the position.

As illustrated in the drawings, since the aggregation threshold value Ith (H) is different in response to the position, it is possible to correctly distinguish the aggregation layer C and the non-aggregation layer from each other by comparing the pixel brightness of the optical interference tomographic image such as the expansion correction image with the aggregation threshold value Ith (H) even when the pixel brightness changes in response to the position from the surface of the landed droplet D in the optical axis direction of the irradiation light.

Incidentally, there is a case in which the thickness of the landed droplet D changes in response to the position within the XY plane and the probe light attenuation characteristic in response to the position from the surface of the landed droplet D in the optical axis direction of the irradiation light is different for each position within the XY plane. FIG. 22 is a diagram describing an example of the optical interference tomographic image accompanied by optical attenuation when the thickness of the landed droplet D is different in response to the position within the XY plane.

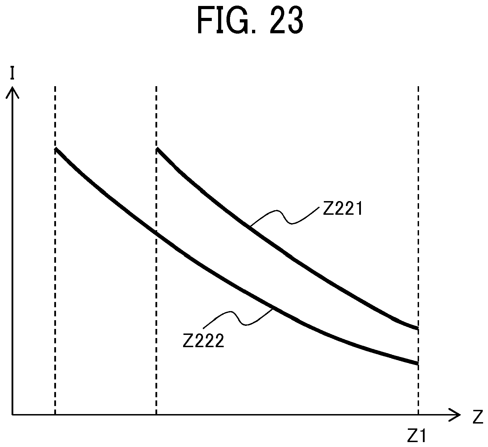

As illustrated in the drawings, the height (thickness) in the Z direction of the image Dim of the landed droplet is different in response to the position in the X direction. Meanwhile, since the probe light attenuation characteristic in response to the position from the surface of the landed droplet D in the optical axis direction of the irradiation light does not change, a change in pixel brightness is illustrated in FIG. 23, for example, when a change in pixel brightness in the Z direction at the position 221 and the position 222 in FIG. 22 is extracted.

In FIG. 23, a plot Z221 indicates a change of the pixel brightness in the Z direction at the position 221 of FIG. 22 and a plot Z222 indicates a change of the pixel brightness in the Z direction at the position 222 of FIG. 22. In this way, since a change of the pixel brightness in the Z direction in response to the attenuation of the probe light is different for each position in the X direction, the aggregation threshold value Ith (H) is provided for each position in the X direction. The aggregation threshold value Ith (H) which is different for each position in the X direction can be regarded as, for example, the two-dimensional image data indicating the aggregation threshold value.

Returning to FIG. 20, the above-described aggregation threshold value Ith (H) is obtained in advance by an experiment or simulation and is stored in the ROM 143. The aggregation threshold value acquisition section 156a acquires the aggregation threshold value Ith (H) by referring to the ROM 143 and outputs the acquired aggregation threshold value Ith (H) to the characteristic value acquisition section 157.

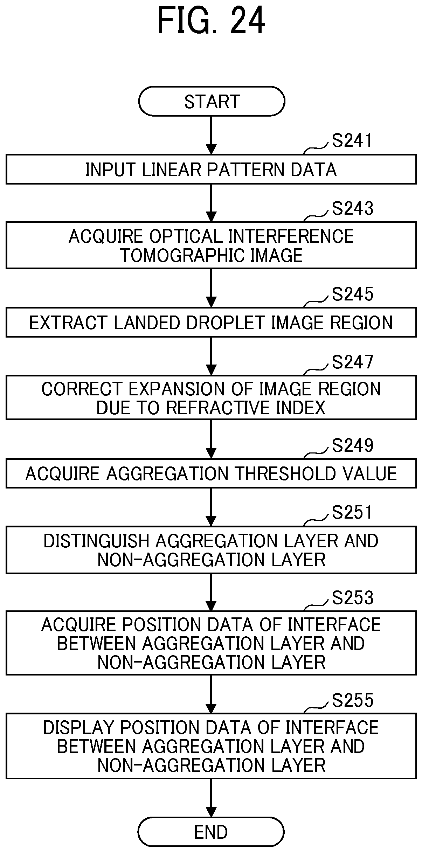

FIG. 24 is a flowchart illustrating an example of a process of the process section 140a of the embodiment. Since the processes of steps S241 to S247 are the same as those of steps S111 to S117 illustrated in FIG. 11, a description will be omitted.

The aggregation threshold value acquisition section 156a acquires the aggregation threshold value Ith (H) by referring to the ROM 143 and outputs the acquired aggregation threshold value Ith (H) to the characteristic value acquisition section 157 (step S249). Further, step S249 may be performed in parallel with any one of steps S241 to S247.

Next, the characteristic value acquisition section 157 acquires a characteristic value indicating the aggregation state of the landed droplet D. The characteristic value acquisition section 157 recognizes a pixel of which the brightness value is smaller than the aggregation threshold value Ith as a pixel corresponding to the non-aggregation layer and recognizes a pixel of which the brightness value is larger than the aggregation threshold value Ith as a pixel corresponding to the aggregation layer C (step S251). Then, the boundary pixel corresponding to the boundary between the aggregation layer C and the non-aggregation layer is specified.

Next, the characteristic value acquisition section 157 acquires the position data of the interface between the aggregation layer C and the non-aggregation layer in the optical axis direction of the irradiation light from the boundary pixel as the characteristic value indicating the aggregation state of the landed droplet D (step S253). The characteristic value acquisition section 157 outputs the acquired position data at the interface between the aggregation layer C and the non-aggregation layer in the optical axis direction of the irradiation light to the characteristic value output device 158.

Next, the characteristic value output device 158 outputs the position data at the interface between the aggregation layer and the non-aggregation layer in the optical axis direction of the irradiation light to the display 160. The display 160 displays the input position data at the interface between the aggregation layer C and the non-aggregation layer in the optical axis direction of the irradiation light (step S255).

In this way, the process section 140a can acquire the characteristic value indicating the aggregation state of the landed droplet D.

As described above, the image forming apparatus 200a according to the embodiment distinguishes the aggregation layer C and the non-aggregation layer from each other in the optical interference tomographic image by comparing the acquired brightness value of the pixel of the optical interference tomographic image with the aggregation threshold value which is different for each position in the optical axis direction of the irradiation light in the landed droplet D. Accordingly, since the number of processes of the optical attenuation correction unit 155 (see FIG. 4) can be decreased, for example, as compared with the first embodiment, it is possible to reduce a load of a calculation process and to shorten a calculation time.

Further, the other effects are the same as those of the above-described embodiment.

### Fourth Embodiment

Next, an example of an image forming apparatus according to a fourth embodiment will be described. Further, a description of the same components as those of the above-described embodiment will be omitted.

There is a case in which the probe light of the aggregation layer C in the landed droplet D does not have a sufficient light intensity for distinguishing the aggregation layer C and the non-aggregation layer from each other. For example, when there is unevenness in the diffusion of the reactant such as aggregation promoter in the landed droplet D or a difference between the apparent particle diameter and the original particle diameter of the aggregated particle is small, there is not a sufficient light intensity difference in the probe light due to each of the aggregation layer C and the non-aggregation layer. When a sufficient light intensity difference is not obtained, the aggregation layer C and the non-aggregation layer cannot be distinguished from each other.

In contrast, the image forming apparatus 200b according to the embodiment includes a fluctuation period acquisition section which acquires the fluctuation period of the light intensity of the probe light for each position in the optical axis direction of the irradiation light in the landed droplet D on the basis of the acquired optical interference tomographic image. Then, the aggregation layer C and the non-aggregation layer are distinguished from each other on the basis of the fluctuation period.

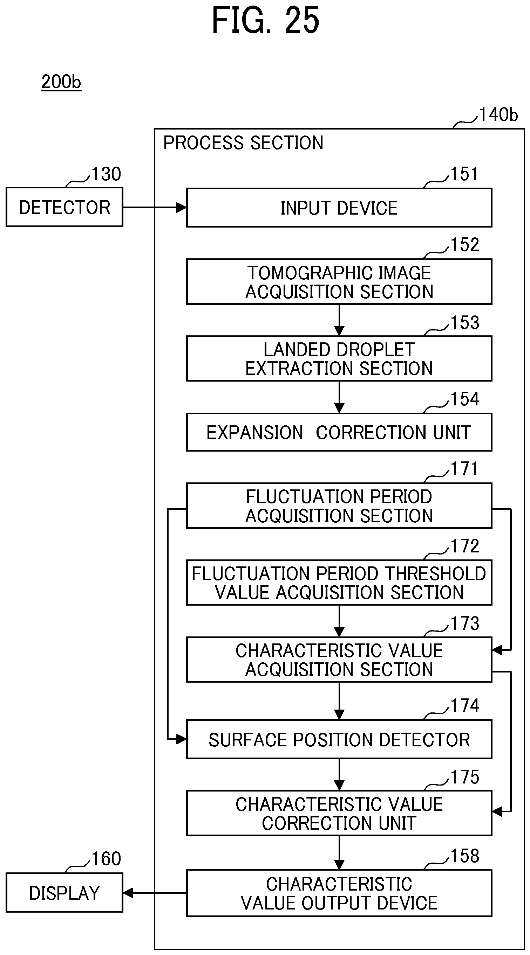

FIG. 25 is a diagram illustrating an example of a component of a process section 140b of an image forming apparatus 200b according to the embodiment as a functional block. The process section 140b includes a fluctuation period acquisition section 171, a fluctuation period threshold value acquisition section 172, a characteristic value acquisition section 173, a surface position detector 174, and a characteristic value correction unit 175.

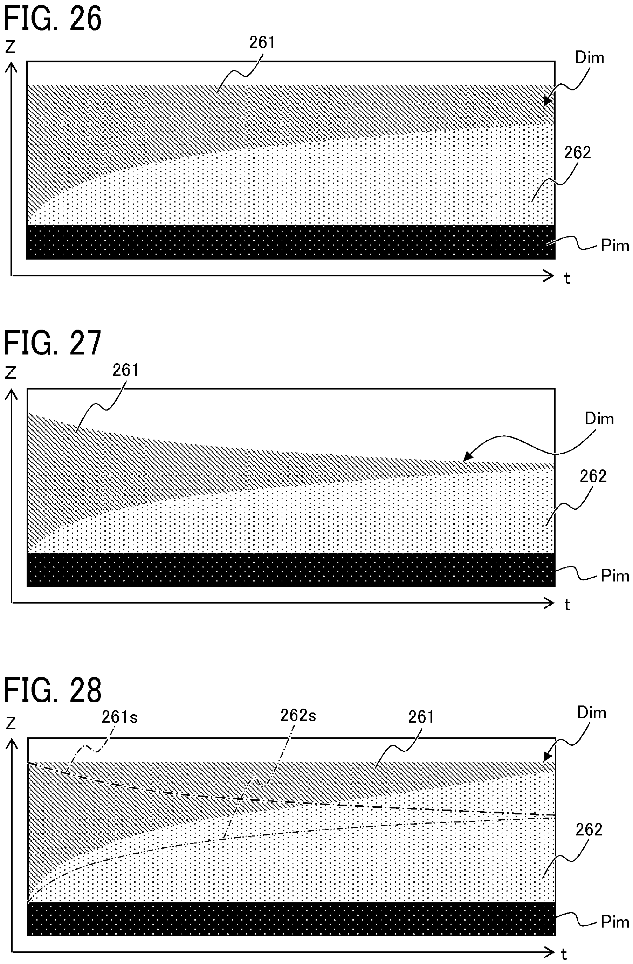

First, the fluctuation period acquisition section 171 will be described with reference to FIG. 26. FIG. 26 is a diagram describing a state in which the distribution of the temporal fluctuation period of the light intensity of the probe light in the optical axis direction of the irradiation light of the landed droplet D changes with time. In FIG. 26, a horizontal axis indicates the time t and a vertical axis indicates the position Z in the optical axis direction of the irradiation light. As the value of the position Z becomes smaller, the position is close to the sheet P. Then, as the value becomes larger, the position is close to the interface between the landed droplet D and the air (the surface of the landed droplet D).

The temporal fluctuation period of the light intensity of the probe light is acquired, for example, on the basis of n number of optical interference tomographic images A1 to An acquired by the measurement section 100 in time series. For example, the coordinate of the pixel of the optical interference tomographic image is set to (x, z) and the brightness values of the pixels A1 (x, z) to An (x, z) of the optical interference tomographic image are respectively set to the brightness I1 (x, z) to In (x, z). By obtaining the fluctuation period of the brightness I1 (x, z) to In (x, z), the temporal fluctuation period of the light intensity of the probe light can be acquired.

A distribution of the temporal fluctuation period in the optical axis direction of the irradiation light can be acquired by setting the optical interference tomographic images A1 to An as a one-dimensional optical interference tomographic image in the optical axis direction of the irradiation light.

Here, since the scattering particles contained in the landed droplet D are in Brownian motion, the light intensity of the probe light changes with time in response to the Brownian motion when the landed droplet D has fluidity. The fluctuation period of the light intensity of the probe light is short in a portion in which the fluidity of the scattering particle is high and the Brownian motion is intense in the landed droplet D. Meanwhile, the Brownian motion is calm and the fluctuation period of the light intensity of the probe light is long in a portion in which the fluidity of the scattering particle is low due to the aggregation. Thus, it is possible to evaluate the fluidity of the landed droplet D on the basis of the fluctuation period of the light intensity of the probe light.

The fluctuation period of the light intensity of the probe light can be calculated by perform Fourier transform on the change data of the pixel brightness value of the optical interference tomographic image. Alternatively, the fluctuation period of the light intensity of the probe light may be calculated by calculating the autocorrelation coefficient.

In FIG. 26, a region 261 in which the fluctuation period of the light intensity of the probe light is short and which is indicated by hatching indicates the non-aggregation layer in which the fluidity of the scattering particle is high. Further, a region 262 in which the fluctuation period of the light intensity of the probe light is long and which is indicated by shading indicates the aggregation layer C in which the fluidity of the scattering particle is low. The boundary between the region 261 and the region 262 becomes close to the surface of the landed droplet D with time. In other words, the interface between the non-aggregation layer and the aggregation layer C becomes close to the surface of the landed droplet D.

Returning to FIG. 25, the fluctuation period acquisition section 171 acquires the fluctuation period data of the light intensity of the probe light illustrated in FIG. 26 and outputs the data to the characteristic value acquisition section 173 and the surface position detector 174.

The fluctuation period threshold value acquisition section 172 acquires a fluctuation period threshold value for distinguishing the non-aggregation layer and the aggregation layer C from each other. Such a fluctuation period threshold value is obtained in advance by an experiment or simulation and is stored in the ROM 143. The fluctuation period threshold value acquisition section 172 acquires a fluctuation period threshold value by referring to the ROM 143 and outputs the acquired fluctuation period threshold value to the characteristic value acquisition section 173.

The characteristic value acquisition section 173 compares the input fluctuation period data with the fluctuation period threshold value to distinguish the non-aggregation layer and the aggregation layer C from each other, acquires the temporal change data of the position of the interface between the non-aggregation layer and the aggregation layer in the optical axis direction of the irradiation light, and outputs the data to the characteristic value correction unit 175.

Incidentally, when a certain time elapses after the landed droplet D is formed on the sheet P, moisture contained in the landed droplet D evaporates or permeates the sheet P so that the state of the landed droplet D changes. FIG. 27 is a diagram describing an example of a state of the landed droplet D with time. FIG. 27 shows a state in which the position of the interface between the landed droplet D and the air (the surface of the landed droplet D) changes with time. A change of the state of the landed droplet D due to the evaporation of moisture causes an error in the acquired characteristic value.

In the embodiment, the surface position of the landed droplet D and the temporal change of the surface position are detected and an influence of a change of the state of the landed droplet D due to the evaporation of moisture is corrected on the basis of the detection value.

In FIG. 25, the surface position detector 174 detects the surface position of the landed droplet D and the temporal change of the surface position. In a portion without the landed droplet D, the temporal change is 0 or a value close to 0. For that reason, the surface position detector 174 can set a predetermined threshold value for the fluctuation period data acquired by the fluctuation period acquisition section 171, detect the surface position of the landed droplet D, and acquire the temporal change of the surface position data. The surface position detector 174 outputs the detected surface position data to the characteristic value correction unit 175.

The characteristic value correction unit 175 corrects the temporal change data of the depth of the interface between the non-aggregation layer and the aggregation layer on the basis of the input surface position data. For example, the surface position correction coefficient for cancelling a decrease in surface position with time is calculated on the basis of the surface position data. The characteristic value correction unit 175 can acquire the corrected characteristic value by multiplying the correction coefficient by the temporal change data of the position of the interface between the non-aggregation layer and the aggregation layer C in the optical axis direction of the irradiation light.

FIG. 28 is a diagram describing an example of a correction result for the temporal change data of the position of the interface between the non-aggregation layer and the aggregation layer C in the optical axis direction of the irradiation light. Similarly to FIG. 26, a region 261 indicated by hatching is a region in which the fluctuation period of the light intensity of the probe light is short and indicates the non-aggregation layer in which the fluidity of the scattering particle is high. Further, a region 262 indicated by shading is a region in which the fluctuation period of the light intensity of the probe light is long and indicates the aggregation layer C in which the fluidity of the scattering particle is low.

Further, a surface position 261s indicated by a one-dotted chain line indicates the surface position of the landed droplet D before correction and a surface position 262s indicated by a two-dotted chain line indicates the interface between the non-aggregation layer and the aggregation layer C position before correction.

When the surface position of the landed droplet D before correction is multiplied by the correction coefficient, the surface position of the region 261 is constant regardless of time. Similarly, when the correction coefficient is multiplied by the temporal change data of the position of the interface between the non-aggregation layer and the aggregation layer before correction, the temporal change data of the position of the interface between the non-aggregation layer and the aggregation layer C in the optical axis direction of the irradiation light is corrected and the corrected characteristic value is acquired.

Returning to FIG. 25, the characteristic value correction unit 175 outputs the corrected characteristic value to the characteristic value output device 158 and the characteristic value output device 158 outputs the input characteristic value data to the display 160.

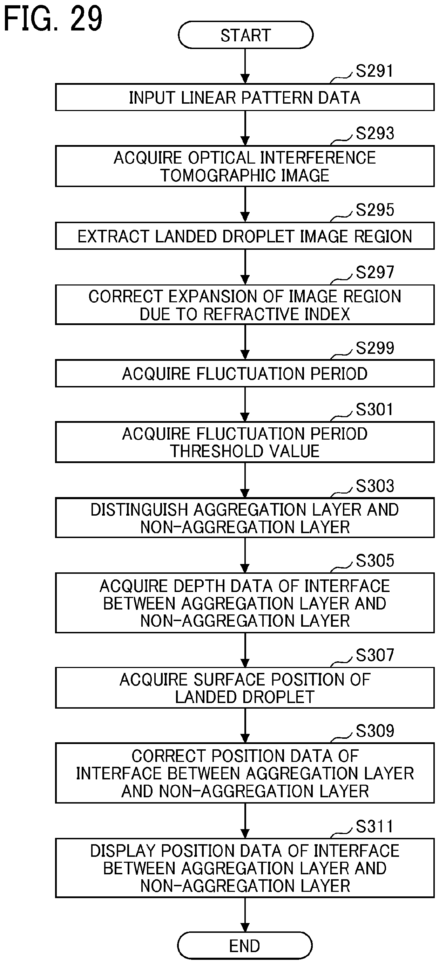

FIG. 29 is a flowchart illustrating an example of a process of the process section 140b of the embodiment. Since the processes of steps S291 to S297 are the same as those of steps S111 to S117 illustrated in FIG. 11, a description will be omitted.

The fluctuation period acquisition section 171 acquires the fluctuation period data of the light intensity of the probe light and outputs the data to the characteristic value acquisition section 173 and the surface position detector 174 (step S299).

The fluctuation period threshold value acquisition section 172 acquires the fluctuation period threshold value for distinguishing the non-aggregation layer and the aggregation layer C from each other. The fluctuation period threshold value acquisition section 172 acquires the fluctuation period threshold value by referring to the ROM 143 and outputs the acquired fluctuation period threshold value to the characteristic value acquisition section 173 (step S301). Further, step S301 may be performed in parallel with any one of steps S291 to S299.

Next, the characteristic value acquisition section 173 compares the input fluctuation period data with the fluctuation period threshold value to distinguish the non-aggregation layer and the aggregation layer C from each other (step S303), acquires the temporal change data of the position of the interface between the non-aggregation layer and the aggregation layer C in the optical axis direction of the irradiation light, and outputs the data to the characteristic value correction unit 175 (step S305).

Next, the surface position detector 174 detects the surface position of the landed droplet D and the temporal change of the surface position and outputs the detected surface position data to the characteristic value correction unit 175 (step S307).

Next, the characteristic value correction unit 175 corrects the temporal change data of the position of the interface between the non-aggregation layer and the aggregation layer C in the optical axis direction of the irradiation light on the basis of the input surface position data and outputs the corrected temporal change data of the interface position to the characteristic value output device 158 (step S309).

Next, the characteristic value output device 158 outputs the input temporal change data of the interface position to the display 160 and the display 160 displays the temporal change data of the interface position (step S311).

In this way, the process section 140b can acquire the characteristic value indicating the aggregation state of the landed droplet D.

As described above, the image forming apparatus 200b according to the embodiment includes a fluctuation period acquisition section which acquires the fluctuation period of the light intensity of the probe light for each position in the optical axis direction of the irradiation light in the landed droplet D on the basis of the acquired optical interference tomographic image. Then, the characteristic value indicating the aggregation state of the landed droplet D is acquired on the basis of the fluctuation period and is output. Accordingly, even when the probe light generated by the aggregation layer C in the landed droplet D does not have a sufficient light intensity, it is possible to acquire and output the characteristic value indicating the aggregation state of the landed droplet D by distinguishing the aggregation layer C and the non-aggregation layer from each other.

Further, in the embodiment, the surface position detector 174 detects the surface position of the landed droplet D and the temporal change of the surface position and the characteristic value correction unit 175 corrects an influence of a change of the state of the landed droplet D due to the evaporation of moisture on the basis of the detection value. Accordingly, it is possible to suppress a characteristic value acquisition error caused by a change of the state of the landed droplet D due to the evaporation of moisture. Further, the surface position detector 174 and the characteristic value correction unit 175 can be also applied to the image forming apparatuses according to the first to third embodiments and the fifth embodiment to be described later and can obtain the same effect.

Further, the other effects are the same as those of the above-described embodiment.

### Fifth Embodiment

Next, an example of an image forming apparatus according to a fifth embodiment will be described. Further, a description of the same components as those of the above-described embodiment will be omitted.

In the first to fourth embodiments, an example in which the aggregation layer C is generated in the landed droplet D has been described, but there is a case in which the aggregation layer is not generated, the aggregate is generated by the aggregation of the scattering particles, and the particle diameter of the scattering particle in appearance is enlarged or the length of the aggregate is enlarged. An image forming apparatus 200c according to the embodiment acquires the characteristic value including the length of the aggregate corresponding to a lump of the scattering particle or the particle diameter of the scattering particle in the landed droplet D and outputs the characteristic value.

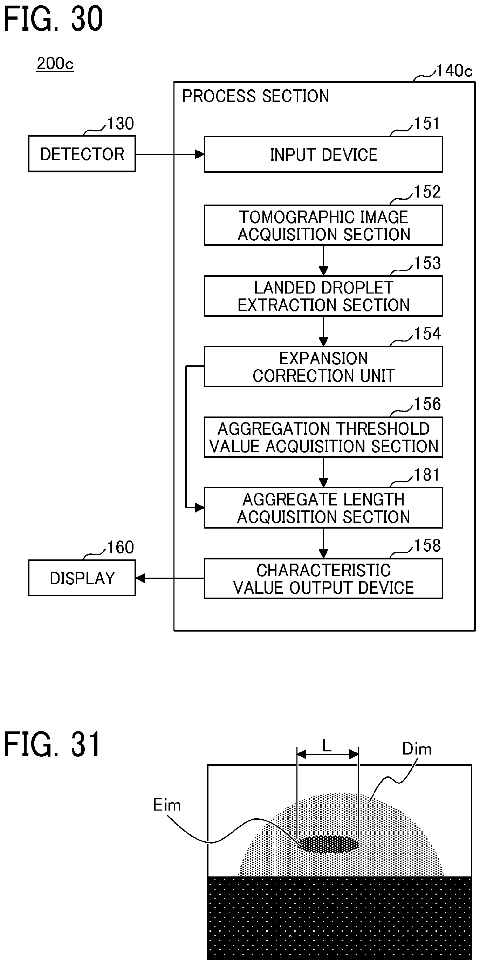

FIG. 30 is a diagram illustrating an example of a component of a process section 140c of an image forming apparatus 200c according to the embodiment as a functional block. The process section 140c includes an aggregate length acquisition section 181.

The aggregate length acquisition section 181 acquires the length of the aggregate corresponding to a lump of the scattering particles or the particle diameter of the scattering particles in the landed droplet D. FIG. 31 is a diagram describing an example of the optical interference tomographic image including the aggregate. In FIG. 31, an image Eim of the aggregate E is illustrated inside the image Dim of the landed droplet D. The aggregate E has an oval cross-section. The length L of the long axis of the oval is an example of the "length of the aggregate". Further, the aggregate length acquisition section 181 is an example of the "characteristic value acquisition section".

Returning to FIG. 30, the aggregate length acquisition section 181 compares the aggregation threshold value acquired by the aggregation threshold value acquisition section 156 with the brightness value of the pixel of the optical interference tomographic image to recognize the aggregate E. Then, the length L of the aggregate E is acquired and is output to the characteristic value acquisition section 157.

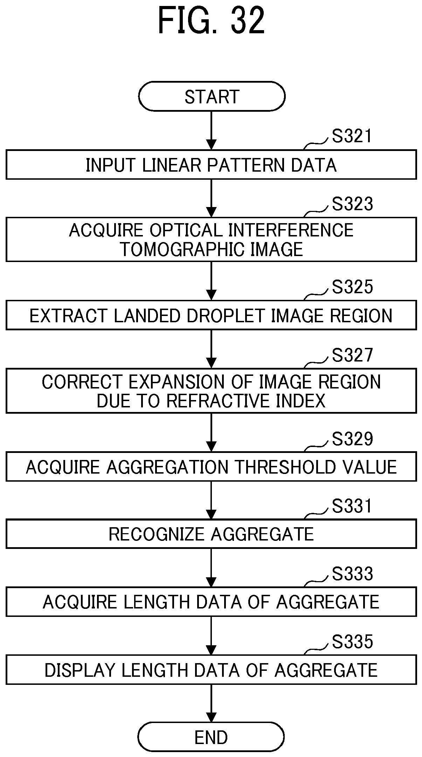

FIG. 32 is a flowchart showing an example of a process of the process section 140c according to the embodiment. Since the processes of steps S321 to S327 are the same as those of steps Sill to S117 illustrated in FIG. 11, a description will be omitted.

The aggregation threshold value acquisition section 156 acquires the aggregation threshold value Ith by referring to the ROM 143 and outputs the acquired aggregation threshold value Ith to the aggregate length acquisition section 181 (step S329). Further, step S329 may be performed in parallel with any one of steps S321 to 327.

Next, the aggregate length acquisition section 181 compares the brightness value of the pixel of the optical interference tomographic image with the aggregation threshold value Ith and recognizes a pixel of which the brightness value is larger than the aggregation threshold value Ith as a pixel corresponding to the aggregate E (step S331). Then, the boundary pixel corresponding to the boundary between the aggregate E and the portion other than the aggregate E in the landed droplet D is specified and the length L of the aggregate E is acquired from the boundary pixel as the characteristic value indicating the aggregation state of the landed droplet D (step S333). The aggregate length acquisition section 181 outputs the acquired length data of the aggregate E to the characteristic value output device 158.

Further, the aggregate E in the landed droplet D is an example of the "aggregation portion of the scattering particles" and the portion other than the aggregate E in the landed droplet D is an example of the "non-aggregation portion of the scattering particles". The boundary between the aggregate E and the portion other than the aggregate E in the landed droplet D is an example of the "boundary portion".

Next, the characteristic value output device 158 outputs the length data of the aggregate E to the display 160 and the display 160 displays the input length data of the aggregate E (step S335).

In this way, the process section 140c can acquire the length of the aggregate E as the characteristic value indicating the aggregation state of the landed droplet D.

As described above, the image forming apparatus 200c according to the embodiment acquires the characteristic value including the length of the aggregate corresponding to a lump of the scattering particle or the particle diameter of the scattering particle in the landed droplet D and outputs the characteristic value. Accordingly, even when the aggregation layer is not generated in the landed droplet D, the characteristic value indicating the aggregation state of the landed droplet D can be acquired and output.

Further, the other effects are the same as those of the above-described embodiment.

Although the recording apparatus according to an embodiment of the present invention has been described above, the invention is not limited to the above-described embodiment and various modifications and improvements can be made within the scope of the invention.

For example, an embodiment of the present invention also includes a recording method. For example, the recording method according to an embodiment of the present invention is a recording method to be performed by the recording apparatus for landing the liquid containing scattering particles onto the recording medium. The recording method including: emitting light from a liquid source; irradiating the liquid landed on the recording medium with an irradiation light being at least a part of the light emitted from the light source; coupling reflected or scattered light with reference light to form a coupled light, the reflected or scattered light being light obtained by reflecting or scattering the irradiation light by the liquid landed on the recording medium, the reference light being at least a part of the light emitted from the light source and not reflected or scattered by the liquid landed on the recording medium; detecting the coupled light; acquiring an optical interference tomographic image of the liquid landed on the recording medium, on basis of the coupled light; and outputting a characteristic value acquired on basis of the optical interference tomographic image, the characteristic value indicating an aggregation state of the liquid landed on the recording medium. By such a recording method, the same effect as that of the recording apparatus can be obtained.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A recording apparatus (200, 250, 300, 200a, 200b, 200c) for landing a liquid containing scattering particles onto a recording medium (P, Md), the recording apparatus comprising:
a light source (101) configured to emit light;
an irradiation optical section (110) configured to irradiate the liquid landed on the recording medium (P, Md) with an irradiation light being at least a part of the light emitted from the light source (101);
a coupling optical section (120) configured to couple reflected or scattered light with reference light to form a coupled light, the reflected or scattered light being light obtained by reflecting or scattering the irradiation light by the liquid landed on the recording medium, the reference light being at least a part of the light emitted from the light source (101) and not reflected or scattered by the liquid landed on the recording medium;
a detector (130) configured to detect the coupled light formed by the coupling optical section;
a tomographic image acquisition section (152) configured to acquire an optical interference tomographic image of the liquid landed on the recording medium, on basis of the coupled light; and
a characteristic value output device (158) configured to output a characteristic value acquired on basis of the optical interference tomographic image, the characteristic value indicating an aggregation state of the liquid landed on the recording medium,
**characterized in that** the apparatus further comprises:
a surface position detector (174) configured to detect a surface position being an interface between the liquid landed on the recording medium and air; and
a characteristic value correction unit (175) configured to correct the characteristic value on basis of the surface position to acquire a corrected characteristic value,
wherein the characteristic value output device (158) is configured to output the corrected characteristic value.

2. The recording apparatus (200, 250, 300, 200a, 200b, 200c) according to claim 1, further comprising a scanning optical section (114) configured to scan the irradiation light in a direction intersecting an optical axis direction of the irradiation light.

3. The recording apparatus (200, 250, 300, 200a, 200b, 200c) according to claim 1 or 2, further comprising:
a fluctuation period acquisition section (171) configured to acquire a fluctuation period of a light intensity of the reflected or scattered light for each position in an optical axis direction of the irradiation light in the liquid landed on the recording medium, on basis of the optical interference tomographic image,
wherein the characteristic value output device (158) is configured to output the characteristic value indicating the aggregation state of the liquid landed on the recording medium and the characteristic value is acquired on basis of the fluctuation period.

4. The recording apparatus (200, 250, 300, 200a, 200b, 200c) according to any one of claims 1 to 3,
wherein the characteristic value includes a shape or a position of a boundary portion between an aggregation portion and a non-aggregation portion of the scattering particles in the liquid landed on the recording medium.

5. The recording apparatus (200, 250, 300, 200a, 200b, 200c) according to claim 4,
wherein the characteristic value includes an aggregation speed being a change speed of the shape or the position of the boundary portion.

6. The recording apparatus (200, 250, 300, 200a, 200b, 200c) according to any one of claims 1 to 3,
wherein the characteristic value includes a length of an aggregate being a lump of the scattering particles or a particle diameter of the scattering particles in the liquid landed on the recording medium.

7. The recording apparatus (200, 250, 300, 200a, 200b, 200c) according to any one of claims 1 to 6, further comprising a characteristic value acquisition section (157),
wherein the light source (101) is configured to emit light beams having different wavelengths,
wherein the tomographic image acquisition section (152) is configured to acquire the optical interference tomographic image for each of the different wavelengths,
wherein the characteristic value acquisition section (157) is configured to acquire the characteristic value on basis of the optical interference tomographic image for each of the different wavelengths.

8. The recording apparatus (200, 250, 300, 200a, 200b, 200c) according to any one of claims 1 to 7, further comprising:
a pre-treatment section (20) configured to apply a pre-treatment liquid for changing an aggregation state of the scattering particles onto at least one surface of the recording medium (P, Md); and
a surface treatment controller (280) configured to control at least one of a surface treatment strength and a surface treatment amount of the recording medium (P, Md) by the pre-treatment liquid on basis of the characteristic value.

9. The recording apparatus (200, 250, 300, 200a, 200b, 200c) according to claim 8,
wherein the pre-treatment section (20) includes a discharge head configured to discharge the pre-treatment liquid to the at least one surface of the recording medium (P, Md).

10. The recording apparatus (200, 250, 300, 200a, 200b, 200c) according to claim 8 or 9,
wherein the pre-treatment liquid contains a reactant,
wherein the surface treatment controller (280) is configured to control a coating amount of the pre-treatment liquid or a concentration of the reactant in the pre-treatment liquid.

11. The recording apparatus (200, 250, 300, 200a, 200b, 200c) according to any one of claims 1 to 10, further comprising
an optical attenuation correction unit (155) configured to correct an optical attenuation of the reflected or scattered light in the liquid.

12. The recording apparatus (200, 250, 300, 200a, 200b, 200c) according to claim 11, further comprising a characteristic value acquisition section (157) configured to compare a brightness value of a pixel included in the optical interference tomographic image with a threshold value and acquire position data or shape data of a boundary portion between an aggregation portion and a non-aggregation portion of the scattering particles in the liquid landed on the recording medium,
wherein the threshold value is different between positions in an optical axis direction of the irradiation light in the liquid landed on the recording medium.

13. A recording method to be performed by a recording apparatus for landing a liquid containing scattering particles onto a recording medium, the method comprising:
emitting light from a light source;
irradiating the liquid landed on the recording medium with an irradiation light being at least a part of the light emitted from the light source;
coupling reflected or scattered light with reference light to form a coupled light, the reflected or scattered light being light obtained by reflecting or scattering the irradiation light by the liquid landed on the recording medium, the reference light being at least a part of the light emitted from the light source and not reflected or scattered by the liquid landed on the recording medium;
detecting the coupled light;
acquiring an optical interference tomographic image of the liquid landed on the recording medium, on basis of the coupled light; and
outputting a characteristic value acquired on basis of the optical interference tomographic image, the characteristic value indicating an aggregation state of the liquid landed on the recording medium, wherein the method further comprises:
detecting a surface position being an interface between the liquid landed on the recording medium and air; and
correcting the characteristic value on basis of the surface position to acquire a corrected characteristic value,
wherein the characteristic value output device (158) is configured to output the corrected characteristic value.

## Patentansprüche

1. Aufzeichnungsvorrichtung (200, 250, 300, 200a, 200b, 200c) zum Absetzen einer Flüssigkeit, die streuende Partikel enthält, auf einem Aufzeichnungsmedium (P, Md), wobei die Aufzeichnungsvorrichtung umfasst:
eine Lichtquelle (101), die dafür konfiguriert ist, Licht zu emittieren;
einen Abschnitt zur optischen Bestrahlung (110), der dafür konfiguriert ist, die auf dem Aufzeichnungsmedium (P, Md) abgesetzte Flüssigkeit mit einem Bestrahlungslicht zu bestrahlen, das mindestens ein Teil des von der Lichtquelle (101) emittierten Lichts ist;
einen Abschnitt zur optischen Kopplung (120), der dafür konfiguriert ist, reflektiertes oder gestreutes Licht mit Referenzlicht zu koppeln, um ein gekoppeltes Licht zu bilden, wobei das reflektierte oder gestreute Licht Licht ist, das durch Reflektieren oder Streuen des Bestrahlungslichts durch die auf dem Aufzeichnungsmedium abgesetzte Flüssigkeit erlangt wird, wobei das Referenzlicht mindestens ein Teil des Lichts ist, das von der Lichtquelle (101) emittiert und nicht durch die auf dem Aufzeichnungsmedium abgesetzte Flüssigkeit reflektiert oder gestreut wird;
einen Detektor (130), der dafür konfiguriert ist, das durch den Abschnitt zur optischen Kopplung gebildete gekoppelte Licht zu detektieren;
einen Abschnitt zur tomografischen Bilderfassung (152), der dafür konfiguriert ist, auf der Grundlage des gekoppelten Lichts ein optisches Interferenztomografiebild der auf dem Aufzeichnungsmedium abgesetzten Flüssigkeit zu erfassen; und
eine Kennwert-Ausgabevorrichtung (158), die dafür konfiguriert ist, einen Kennwert auszugeben, der auf der Grundlage des optischen Interferenztomografiebildes erfasst wurde, wobei der Kennwert einen Aggregationszustand der auf dem Aufzeichnungsmedium abgesetzten Flüssigkeit angibt,
**dadurch gekennzeichnet, dass** die Vorrichtung ferner umfasst:
einen Oberflächenpositionsdetektor (174), der dafür konfiguriert ist, eine Oberflächenposition zu detektieren, die eine Grenzfläche zwischen der auf dem Aufzeichnungsmedium abgesetzten Flüssigkeit und Luft ist; und
eine Kennwert-Korrektureinheit (175), die dafür konfiguriert ist, den Kennwert auf der Grundlage der Oberflächenposition zu korrigieren, um einen korrigierten Kennwert zu erhalten,
wobei die Kennwert-Ausgabevorrichtung (158) dafür konfiguriert ist, den korrigierten Kennwert auszugeben.

2. Aufzeichnungsvorrichtung (200, 250, 300, 200a, 200b, 200c) nach Anspruch 1, ferner einen Abschnitt zur optischen Abtastung (114) umfassend, der dafür konfiguriert ist, das Bestrahlungslicht in einer Richtung abzutasten, die eine Richtung der optischen Achse des Bestrahlungslichts schneidet.

3. Aufzeichnungsvorrichtung (200, 250, 300, 200a, 200b, 200c) nach Anspruch 1 oder 2, ferner umfassend:
einen Schwankungsperioden-Erfassungsabschnitt (171), der dafür konfiguriert ist, auf der Grundlage des optischen Interferenztomografiebildes eine Schwankungsperiode einer Lichtintensität des reflektierten oder gestreuten Lichts für jede Position in einer Richtung der optischen Achse des Bestrahlungslichts in der auf dem Aufzeichnungsmedium abgesetzten Flüssigkeit zu erfassen,
wobei die Kennwert-Ausgabevorrichtung (158) dafür konfiguriert ist, den Kennwert auszugeben, der den Aggregationszustand der auf dem Aufzeichnungsmedium abgesetzten Flüssigkeit angibt, und der Kennwert auf der Grundlage der Schwankungsperiode erfasst wird.

4. Aufzeichnungsvorrichtung (200, 250, 300, 200a, 200b, 200c) nach einem der Ansprüche 1 bis 3,
wobei der Kennwert eine Form oder eine Position eines Grenzbereichs zwischen einem Aggregationsbereich und einem Nicht-Aggregationsbereich der streuenden Partikel in der auf dem Aufzeichnungsmedium abgesetzten Flüssigkeit einschließt.

5. Aufzeichnungsvorrichtung (200, 250, 300, 200a, 200b, 200c) nach Anspruch 4,
wobei der Kennwert eine Aggregationsgeschwindigkeit einschließt, die eine Änderungsgeschwindigkeit der Form oder der Position des Grenzbereichs ist.

6. Aufzeichnungsvorrichtung (200, 250, 300, 200a, 200b, 200c) nach einem der Ansprüche 1 bis 3,
wobei der Kennwert eine Länge eines Aggregats, das ein Klumpen der streuenden Partikel ist, oder einen Partikeldurchmesser der streuenden Partikel in der auf dem Aufzeichnungsmedium abgesetzten Flüssigkeit einschließt.

7. Aufzeichnungsvorrichtung (200, 250, 300, 200a, 200b, 200c) nach einem der Ansprüche 1 bis 6, ferner einen Kennwert-Erfassungsabschnitt (157) umfassend,
wobei die Lichtquelle (101) dafür konfiguriert ist, Lichtstrahlen mit unterschiedlichen Wellenlängen zu emittieren,
wobei der Abschnitt zur tomografischen Bilderfassung (152) dafür konfiguriert ist, das optische Interferenztomografiebild für jede der unterschiedlichen Wellenlängen zu erfassen,
wobei der Kennwert-Erfassungsabschnitt (157) dafür konfiguriert ist, den Kennwert auf der Grundlage des optischen Interferenztomografiebildes für jede der unterschiedlichen Wellenlängen zu erfassen.

8. Aufzeichnungsvorrichtung (200, 250, 300, 200a, 200b, 200c) nach einem der Ansprüche 1 bis 7, ferner umfassend:
einen Vorbehandlungsabschnitt (20), der dafür konfiguriert ist, eine Vorbehandlungsflüssigkeit zum Ändern eines Aggregationszustands der streuenden Partikel auf mindestens eine Oberfläche des Aufzeichnungsmediums (P, Md) aufzubringen; und
eine Steuerungseinrichtung für die Oberflächenbehandlung (280), die dafür konfiguriert ist, auf der Grundlage des Kennwerts, mindestens eines von einer Oberflächenbehandlungsstärke und einem Oberflächenbehandlungsbetrag des Aufzeichnungsmediums (P, Md) durch die Vorbehandlungsflüssigkeit zu steuern.

9. Aufzeichnungsvorrichtung (200, 250, 300, 200a, 200b, 200c) nach Anspruch 8,
wobei der Vorbehandlungsabschnitt (20) einen Ausstoßkopf einschließt, der dafür konfiguriert ist, die Vorbehandlungsflüssigkeit auf die mindestens eine Oberfläche des Aufzeichnungsmediums (P, Md) auszustoßen.

10. Aufzeichnungsvorrichtung (200, 250, 300, 200a, 200b, 200c) nach Anspruch 8 oder 9,
wobei die Vorbehandlungsflüssigkeit ein Reaktionsmittel enthält,
wobei die Steuerungseinrichtung für die Oberflächenbehandlung (280) dafür konfiguriert ist, eine Beschichtungsmenge der Vorbehandlungsflüssigkeit oder eine Konzentration des Reaktionsmittels in der Vorbehandlungsflüssigkeit zu steuern.

11. Aufzeichnungsvorrichtung (200, 250, 300, 200a, 200b, 200c) nach einem der Ansprüche 1 bis 10, ferner umfassend:
eine Korrektureinheit für die optische Abschwächung (155), die dafür konfiguriert ist, eine optische Abschwächung des reflektierten oder gestreuten Lichts in der Flüssigkeit zu korrigieren.

12. Aufzeichnungsvorrichtung (200, 250, 300, 200a, 200b, 200c) nach Anspruch 11, ferner einen Kennwert-Erfassungsabschnitt (157) umfassend, der dafür konfiguriert ist, einen Helligkeitswert eines in dem optischen Interferenztomografiebild enthaltenen Pixels mit einem Schwellenwert zu vergleichen und Positionsdaten oder Formdaten eines Grenzbereichs zwischen einem Aggregationsbereich und einem Nicht-Aggregationsbereich der streuenden Partikel in der auf dem Aufzeichnungsmedium abgesetzten Flüssigkeit zu erfassen,
wobei der Schwellenwert zwischen Positionen in einer Richtung der optischen Achse des Bestrahlungslichts in der auf dem Aufzeichnungsmedium abgesetzten Flüssigkeit unterschiedlich ist.

13. Aufzeichnungsverfahren, das durch eine Aufzeichnungsvorrichtung zum Absetzen einer Flüssigkeit, die streuende Partikel enthält, auf einem Aufzeichnungsmedium durchzuführen ist, wobei das Verfahren umfasst:
Emittieren von Licht von einer Lichtquelle;
Bestrahlen der auf dem Aufzeichnungsmedium abgesetzten Flüssigkeit mit einem Bestrahlungslicht, das mindestens ein Teil des von der Lichtquelle emittierten Lichts ist;
Koppeln von reflektiertem oder gestreutem Licht mit Referenzlicht, um ein gekoppeltes Licht zu bilden, wobei das reflektierte oder gestreute Licht Licht ist, das durch Reflektieren oder Streuen des Bestrahlungslichts durch die auf dem Aufzeichnungsmedium abgesetzte Flüssigkeit erlangt wird, wobei das Referenzlicht mindestens ein Teil des Lichts ist, das von der Lichtquelle emittiert und nicht durch die auf dem Aufzeichnungsmedium abgesetzte Flüssigkeit reflektiert oder gestreut wird;
Detektieren des gekoppelten Lichts;
Erfassen eines optischen Interferenztomografiebildes der auf dem Aufzeichnungsmedium abgesetzten Flüssigkeit auf der Basis des gekoppelten Lichts; und
Ausgeben eines Kennwerts, der auf der Grundlage des optischen Interferenztomografie-Bildes gewonnen wird, wobei der Kennwert einen Aggregationszustand der auf dem Aufzeichnungsmedium abgesetzten Flüssigkeit angibt, wobei das Verfahren ferner umfasst:
Detektieren einer Oberflächenposition, die eine Grenzfläche zwischen der auf dem Aufzeichnungsmedium abgesetzten Flüssigkeit und Luft ist; und
Korrigieren des Kennwerts auf der Grundlage der Oberflächenposition, um einen korrigierten Kennwert zu erhalten,
wobei die Kennwert-Ausgabevorrichtung (158) dafür konfiguriert ist, den korrigierten Kennwert auszugeben.

## Revendications

1. Appareil d'enregistrement (200, 250, 300, 200a, 200b, 200c) pour déposer un liquide qui contient des particules de diffusion sur un support d'enregistrement (P, Md), l'appareil d'enregistrement comprenant :
une source de lumière (101) qui est configurée pour émettre de la lumière ;
une section optique d'irradiation (110) qui est configurée pour irradier le liquide qui est déposé sur le support d'enregistrement (P, Md) à l'aide d'une lumière d'irradiation qui est au moins une partie de la lumière qui est émise depuis la source de lumière (101) ;
une section optique de couplage (120) qui est configurée pour coupler la lumière réfléchie ou diffusée avec une lumière de référence pour former une lumière couplée, la lumière réfléchie ou diffusée étant la lumière qui est obtenue en faisant réfléchir ou diffuser la lumière d'irradiation par le liquide qui est déposé sur le support d'enregistrement, la lumière de référence étant au moins une partie de la lumière qui est émise depuis la source de lumière (101) et qui n'est ni réfléchie, ni diffusée par le liquide qui est déposé sur le support d'enregistrement ;
un détecteur (130) qui est configuré pour détecter la lumière couplée qui est formée par la section optique de couplage ;
une section d'acquisition d'image tomographique (152) qui est configurée pour acquérir une image tomographique à interférence optique du liquide qui est déposé sur le support d'enregistrement, sur la base de la lumière couplée ; et
un dispositif d'émission en sortie de valeur de caractéristique (158) qui est configuré pour émettre en sortie une valeur de caractéristique qui est acquise sur la base de l'image tomographique à interférence optique, la valeur de caractéristique indiquant un état d'agrégation du liquide qui est déposé sur le support d'enregistrement ;
**caractérisé en ce que** l'appareil comprend en outre :
un détecteur de position de surface (174) qui est configuré pour détecter une position de surface qui est une interface entre le liquide qui est déposé sur le support d'enregistrement et l'air ; et
une unité de correction de valeur de caractéristique (175) qui est configurée pour corriger la valeur de caractéristique sur la base de la position de surface pour acquérir une valeur de caractéristique corrigée ;
dans lequel le dispositif d'émission en sortie de valeur de caractéristique (158) est configuré pour émettre en sortie la valeur de caractéristique corrigée.

2. Appareil d'enregistrement (200, 250, 300, 200a, 200b, 200c) selon la revendication 1, comprenant en outre une section optique de balayage (114) qui est configurée pour balayer la lumière d'irradiation dans une direction qui intersecte une direction d'axe optique de la lumière d'irradiation.

3. Appareil d'enregistrement (200, 250, 300, 200a, 200b, 200c) selon la revendication 1 ou 2, comprenant en outre :
une section d'acquisition de période de fluctuation (171) qui est configurée pour acquérir une période de fluctuation d'une intensité lumineuse de la lumière réfléchie ou diffusée pour chaque position dans une direction d'axe optique de la lumière d'irradiation dans le liquide qui est déposé sur le support d'enregistrement, sur la base de l'image tomographique à interférence optique ;
dans lequel le dispositif d'émission en sortie de valeur de caractéristique (158) est configuré pour émettre en sortie la valeur de caractéristique qui indique l'état d'agrégation du liquide qui est déposé sur le support d'enregistrement, et la valeur de caractéristique est acquise sur la base de la période de fluctuation.

4. Appareil d'enregistrement (200, 250, 300, 200a, 200b, 200c) selon l'une quelconque des revendications 1 à 3,
dans lequel la valeur de caractéristique inclut une forme ou une position d'une partie de frontières entre une partie d'agrégation et une partie de non agrégation des particules de diffusion dans le liquide qui est déposé sur le support d'enregistrement.

5. Appareil d'enregistrement (200, 250, 300, 200a, 200b, 200c) selon la revendication 4,
dans lequel la valeur de caractéristique inclut une vitesse d'agrégation qui est une vitesse de variation de la forme ou de la position de la partie de frontière.

6. Appareil d'enregistrement (200, 250, 300, 200a, 200b, 200c) selon l'une quelconque des revendications 1 à 3,
dans lequel la valeur de caractéristique inclut une longueur d'un agrégat qui est un bloc des particules de diffusion ou un diamètre de particule des particules de diffusion dans le liquide qui est déposé sur le support d'enregistrement.

7. Appareil d'enregistrement (200, 250, 300, 200a, 200b, 200c) selon l'une quelconque des revendications 1 à 6, comprenant en outre une section d'acquisition de valeur de caractéristique (157),
dans lequel la source de lumière (101) est configurée pour émettre des faisceaux lumineux qui présentent des longueurs d'onde différentes ;
dans lequel la section d'acquisition d'image tomographique (152) est configurée pour acquérir l'image tomographique à interférence optique pour chacune des longueurs d'onde différentes ;
dans lequel la section d'acquisition de valeur de caractéristique (157) est configurée pour acquérir la valeur de caractéristique sur la base de l'image tomographique à interférence optique pour chacune des longueurs d'onde différentes.

8. Appareil d'enregistrement (200, 250, 300, 200a, 200b, 200c) selon l'une quelconque des revendications 1 à 7, comprenant en outre :
une section de prétraitement (20) qui est configurée pour appliquer un liquide de prétraitement pour modifier un état d'agrégation des particules de diffusion sur au moins une surface du support d'enregistrement (P, Md) ; et
un contrôleur de traitement de surface (280) qui est configuré pour contrôler au moins une parmi une puissance de traitement de surface et une quantité de traitement de surface du support d'enregistrement (P, Md) par le liquide de prétraitement sur la base de la valeur de caractéristique.

9. Appareil d'enregistrement (200, 250, 300, 200a, 200b, 200c) selon la revendication 8,
dans lequel la section de prétraitement (20) inclut une tête de décharge qui est configurée pour décharger le liquide de prétraitement sur l'au moins une surface du support d'enregistrement (P, Md).

10. Appareil d'enregistrement (200, 250, 300, 200a, 200b, 200c) selon la revendication 8 ou 9,
dans lequel le liquide de prétraitement contient un réactif ;
dans lequel le contrôleur de traitement de surface (280) est configuré pour contrôler une quantité de revêtement du liquide de prétraitement ou une concentration du réactif dans le liquide de prétraitement.

11. Appareil d'enregistrement (200, 250, 300, 200a, 200b, 200c) selon l'une quelconque des revendications 1 à 10, comprenant en outre :
une unité de correction d'atténuation optique (155) qui est configurée pour corriger une atténuation optique de la lumière réfléchie ou diffusée dans le liquide.

12. Appareil d'enregistrement (200, 250, 300, 200a, 200b, 200c) selon la revendication 11, comprenant en outre une section d'acquisition de valeur de caractéristique (157) qui est configurée pour comparer une valeur de luminosité d'un pixel qui est inclus dans l'image tomographique à interférence optique avec une valeur de seuil et pour acquérir des données de position ou des données de forme d'une partie de frontière entre une partie d'agrégation et une partie de non agrégation des particules de diffusion dans le liquide qui est déposé sur le support d'enregistrement ;
dans lequel la valeur de seuil est différente entre des positions dans une direction d'axe optique de la lumière d'irradiation dans le liquide qui est déposé sur le support d'enregistrement.

13. Procédé d'enregistrement destiné à être réalisé par un appareil d'enregistrement pour faire déposer un liquide qui contient des particules de diffusion sur un support d'enregistrement, le procédé comprenant :
l'émission d'une lumière depuis une source de lumière ;
l'irradiation du liquide qui est déposé sur le support d'enregistrement à l'aide d'une lumière d'irradiation qui est au moins une partie de la lumière qui est émise depuis la source de lumière ;
le couplage de la lumière réfléchie ou diffusée avec une lumière de référence pour former une lumière couplée, la lumière réfléchie ou diffusée étant la lumière qui est obtenue en faisant réfléchir ou diffuser la lumière d'irradiation par le liquide qui est déposé sur le support d'enregistrement, la lumière de référence étant au moins une partie de la lumière qui est émise depuis la source de lumière et qui n'est ni réfléchie, ni diffusée par le liquide qui est déposé sur le support d'enregistrement ;
la détection de la lumière couplée ;
l'acquisition d'une image tomographique à interférence optique du liquide qui est déposé sur le support d'enregistrement, sur la base de la lumière couplée ; et
l'émission en sortie d'une valeur de caractéristique qui est acquise sur la base de l'image tomographique à interférence optique, la valeur de caractéristique indiquant un état d'agrégation du liquide qui est déposé sur le support d'enregistrement, dans lequel le procédé comprend en outre :
la détection d'une position de surface qui est une interface entre le liquide qui est déposé sur le support d'enregistrement et l'air ; et
la correction de la valeur de caractéristique sur la base de la position de surface pour acquérir une valeur de caractéristique corrigée ;
dans lequel le dispositif d'émission en sortie de valeur de caractéristique (158) est configuré pour émettre en sortie la valeur de caractéristique corrigée.
